# EUROPEAN PATENT APPLICATION

(11) **EP 4 692 998 A1**
(43) Date of publication of application: **11.02.2026**
(21) Application number: 24855515.3
(22) Date of filing: 10.07.2024
(51) Int. Cl.: G06F 3/0354

(54) **INTERACTION METHOD AND APPARATUS, AND ELECTRONIC DEVICE AND STORAGE MEDIUM**

(30) Priority: 21.08.2023 CN 202311054670
(71) Applicant: Huawei Technologies Co., Ltd., Shenzhen, Guangdong 518129 (CN)
(72) Inventor: CHEN, Yifan, Shenzhen, Guangdong 518129 (CN); YU, Yang, Shenzhen, Guangdong 518129 (CN)
(74) Representative: Grünecker Patent- und Rechtsanwälte PartG mbB
(86) International application number: PCT/CN2024/104689
(87) International publication number: WO 2025/039787

(57) **Abstract**

Embodiments of this application provide an interaction method and apparatus, an electronic device, and a storage medium, so that a specific gesture operation can be performed on a stylus in a hover state, to draw an ink wash painting on a matched electronic device. This extends diversity of writing styles that can be input by the stylus, thereby meeting users' requirements in different scenarios, and improving user experience. The interaction method includes: detecting that a stylus is in a hover state and detecting a preset gesture operation on the stylus; and generating and displaying an ink wash painting in response to the preset gesture operation.

## Description

This application claims priority to Chinese Patent Application No. 202311054670.7, filed with the China National Intellectual Property Administration on August 21, 2023, and entitled "INTERACTION METHOD AND APPARATUS, ELECTRONIC DEVICE, AND STORAGE MEDIUM", which is incorporated herein by reference in its entirety.

### TECHNICAL FIELD

Embodiments of this application relate to the field of terminal technologies, and in particular, to an interaction method and apparatus, an electronic device, and a storage medium.

### BACKGROUND

Currently, for electronic devices configured with a stylus, the stylus can be used for various functions, such as recording text or drawing flowcharts or mind maps. However, in these scenarios, when the stylus is used for information input, it always simulates the writing experience of a hard pen style. In other words, a writing style that can be input by the stylus is simple, and cannot meet users' requirements in different scenarios. As a result, user experience is poor.

### SUMMARY

Embodiments of this application provide an interaction method and apparatus, an electronic device, and a storage medium, so that a specific gesture operation can be performed on a stylus in a hover state, to draw an ink wash painting on a matched electronic device. This extends diversity of writing styles that can be input by the stylus, thereby meeting users' requirements in different scenarios, and improving user experience.

According to a first aspect, an embodiment of this application provides an interaction method, applied to an electronic device. The electronic device supports a stylus as a corresponding input device. The method includes:
detecting that the stylus is in a hover state and detecting a preset gesture operation on the stylus; and
generating and displaying an ink wash painting in response to the preset gesture operation.

In this embodiment of this application, the stylus is placed in the hover state, and then a simple gesture operation is performed on the stylus in the hover state, so that the ink wash painting can be generated and displayed on the electronic device matching the stylus. This expands an interaction function between the stylus and the electronic device, meets a requirement of a user for drawing the ink wash painting on the electronic device, and improves user experience.

Optionally, the preset gesture operation is a squeeze operation on a body of the stylus. Generating and displaying the ink wash painting in response to the preset gesture operation includes:
adjusting a reference ink output of the stylus in response to the squeeze operation;
determining, based on a correspondence between an ink output and opacity of a line and a correspondence between an ink output and a width of a line, reference opacity and a reference width corresponding to the reference ink output; and
generating and displaying a preview ink wash painting, where opacity of a line of the preview ink wash painting is the reference opacity, and a width of the line of the preview ink wash painting is the reference width.

In this embodiment of this application, the squeeze operation may be performed on the stylus in the hover state, to adjust the reference ink output of the stylus, thereby preparing for subsequent ink wash painting drawing. In addition, the preview ink wash painting may be generated based on the line opacity and the line width that correspond to the reference ink output, so that the user can more intuitively adjust the reference ink output.

Optionally, the method further includes:
obtaining an actual pressure value at a contact point of the stylus in response to a drawing operation of the stylus;
determining an actual ink output based on the actual pressure value and the reference ink output; and
determining, based on the actual ink output, to generate and display a line combination with corresponding opacity and a corresponding width.

In this embodiment of this application, because a degree of force applied by the user when the user performs drawing in a drawing process also affects an ink output, in a process in which the user adjusts the reference ink output of the stylus and uses the stylus to perform drawing, the electronic device may further obtain the pressure value at the contact point of the stylus, and then adjust the reference ink output based on the pressure value. In other words, the user may adjust the pressure value applied to the electronic device based on a requirement of the user, to control opacity and a thickness of a finally presented line. This improves user experience.

Optionally, the preset gesture operation is a tap operation on a body of the stylus. Generating and displaying the ink wash painting in response to the preset gesture operation includes:
in response to the tap operation, determining, on a display of the electronic device, a scatter point generation area corresponding to the stylus;
randomly generating scatter points in the scatter point generation area based on a first preset quantity; and
displaying the ink wash painting including at least the scatter points.

In this embodiment of this application, the tap operation may be performed on the stylus in the hover state, and a preset quantity of scatter points are randomly generated in a corresponding scatter point generation area on the electronic device, to generate the ink wash painting with a scatter point effect by using the stylus.

Optionally, a spatial coordinate system is established by using a preset reference point on the display of the electronic device as a reference. Determining, on the display of the electronic device, the scatter point generation area corresponding to the stylus includes:
determining first tip spatial coordinates of a tip of the stylus, and determining a tilt angle between the stylus and the preset reference point;
projecting the first tip spatial coordinates onto the display, to obtain a first projection point, and using the first projection point as a central point of the scatter point generation area;
determining a radius value of the scatter point generation area based on a vertical component of the first tip spatial coordinates relative to the display and the tilt angle; and
determining the scatter point generation area based on the central point and the radius value.

In this embodiment of this application, the scatter point generation area is determined based on tip spatial coordinates of the stylus in the hover state and the tilt angle of the stylus. In other words, the user may adjust the tip spatial coordinates of the stylus and the tilt angle of the stylus based on user's actual requirements, to change the scatter point generation area, so that a scatter point can be generated in any area as required by the user. This improves user experience.

Optionally, randomly generating the scatter points in the scatter point generation area based on the first preset quantity includes:
dividing the scatter point generation area into a second preset quantity of scatter point generation subareas; and
randomly generating a plurality of scatter points in each scatter point generation subarea based on a distance between each scatter point generation subarea and the central point, where a sum of quantities of scatter points in all the scatter point generation subareas is equal to the first preset quantity, a size of a scatter point in a same scatter point generation subarea is positively correlated with a distance between the scatter point generation subarea and the central point, and density and opacity of the scatter point in the same scatter point generation subarea are both negatively correlated with the distance between the scatter point generation subarea and the central point.

In this embodiment of this application, the scatter point generation area may be divided into the plurality of scatter point generation subareas, and then sizes of scatter points, density of the scatter points, and opacity of the scatter points in each scatter point generation subarea are determined based on a distance between each scatter point generation subarea and the central point. For example, a greater distance between the scatter point generation subarea and the central point indicates a larger scatter point, smaller density of the scatter points (namely, sparser scatter points), and smaller opacity of the scatter point (namely, a lighter color of the scatter point). In this way, a finally presented scatter point status can better fit a status of a scatter point generated based on an ink brush, thereby presenting a better visual effect.

Optionally, the preset gesture operation is a wave operation. Generating and displaying the ink wash painting in response to the preset gesture operation includes:
controlling, in response to the wave operation, a pre-drawn line to spread a preset spreading distance in a direction corresponding to the wave operation, to generate a spreading area, where opacity of the pre-drawn line in a spreading process is negatively correlated with the preset spreading distance, and opacity of the spreading area is negatively correlated with a distance between the spreading area and the pre-drawn line; and
displaying the ink wash painting including at least the pre-drawn line and the spreading area.

In this embodiment of this application, the wave operation may be performed on the stylus in the hover state. In this case, the pre-drawn line on the display of the electronic device spreads a specified distance in a waving direction, to form a spreading area. In addition, in a spreading process, as a spreading distance increases, opacity of the pre-drawn line gradually decreases. In other words, a spreading area in which a color gradually becomes lighter from the pre-drawn line to the spreading area is formed, to generate the ink wash painting with a spreading effect by using the stylus.

Optionally, controlling, in response to the wave operation, the pre-drawn line to spread the preset spreading distance in the direction corresponding to the wave operation, to generate the spreading area includes:
determining an actual spacing distance between a tip of the stylus at the beginning of the wave operation and the pre-drawn line in response to the wave operation;
determining, based on a correspondence between a spacing distance and a preset spreading distance, the preset spreading distance corresponding to the actual spacing distance, where the spacing distance is positively correlated with the preset spreading distance; and
controlling the pre-drawn line to spread the preset spreading distance in the direction corresponding to the wave operation, to generate the spreading area.

In this embodiment of this application, the spacing distance between the tip of the stylus and the pre-drawn line is positively correlated with the spreading distance of the pre-drawn line. In other words, a greater spacing distance indicates a greater spreading distance, and a smaller spacing distance indicates a smaller spreading distance. Therefore, the user may adjust the spacing distance between the tip of the stylus and the pre-drawn line based on user's actual requirements, to generate the spreading area with a specific spreading distance, so as to achieve a better visual effect.

Optionally, the preset gesture operation is a wave operation. Generating and displaying the ink wash painting in response to the preset gesture operation includes:
determining an actual waving speed in response to the wave operation;
determining, based on a correspondence between a waving speed and a spreading speed, an actual spreading speed corresponding to the actual waving speed, where the waving speed is positively correlated with the spreading speed;
controlling a pre-drawn line to spread at the actual spreading speed in a direction corresponding to the wave operation, to generate a spreading area, where opacity of the pre-drawn line in a spreading process is negatively correlated with the preset spreading distance, and opacity of the spreading area is negatively correlated with a distance between the spreading area and the pre-drawn line; and
in response to reaching preset spreading time, stopping spreading the pre-drawn line, and generating and displaying the ink wash painting including at least the pre-drawn line and the spreading area.

In this embodiment of this application, a waving speed of the stylus may be considered to be positively correlated with the spreading speed of the pre-drawn line. In other words, a greater waving speed indicates a greater spreading speed, and a smaller waving speed indicates a smaller spreading speed. Therefore, when spreading time is fixed, a greater spreading speed indicates a greater spreading distance in a process of a wave operation. In this case, the user may adjust the waving speed of the stylus based on user's actual requirements, to generate the spreading area with a specific spreading distance, so as to achieve a better visual effect.

Optionally, before determining, based on the correspondence between a waving speed and a spreading speed, the actual spreading speed corresponding to the actual waving speed, the method further includes:
determining an actual spacing distance between a tip of the stylus at the beginning of the wave operation and the pre-drawn line.

Determining, based on the correspondence between a waving speed and a spreading speed, the actual spreading speed corresponding to the actual waving speed includes:
determining, based on the correspondence between a waving speed and a spreading speed/a correspondence between a spacing distance and a spreading speed, the actual spreading speed corresponding to the actual waving speed/the actual spacing distance, where the spacing distance is positively correlated with the spreading speed.

In this embodiment of this application, in addition to the waving speed, the spreading distance of the pre-drawn line is further related to the spacing distance between the tip of the stylus and the pre-drawn line. In other words, a greater spacing distance indicates a greater corresponding spreading distance, and a smaller spacing distance indicates a smaller corresponding spreading distance. Therefore, the user may adjust the spacing distance between the tip of the stylus and the pre-drawn line and the waving speed based on user's actual requirements, to generate the spreading area with a specific spreading distance, so as to achieve a better visual effect.

Optionally, a spatial coordinate system is established by using a preset reference point on a display of the electronic device as a reference, and the tip of the stylus at the beginning of the wave operation has second tip spatial coordinates. Determining the actual spacing distance between the tip of the stylus at the beginning of the wave operation and the pre-drawn line in response to the wave operation includes:
projecting the second tip spatial coordinates onto the display, to obtain a second projection point;
determining a point-line distance between the second projection point and the pre-drawn line; and
using the point-line distance as the actual spacing distance.

In this embodiment of this application, a projection point of tip spatial coordinates of the stylus on the display of the electronic device may be first determined, then a point-line distance between the projection point and the pre-drawn line is calculated, and then the point-line distance is used as the spacing distance between the tip of the stylus and the pre-drawn line, so that the spacing distance between the tip of the stylus and the pre-drawn line can be accurately and conveniently calculated.

Optionally, before detecting that the stylus is in the hover state and detecting the preset gesture operation on the stylus is detected, the method further includes:
controlling a pre-drawn line to spread in a preset spreading direction at a preset spreading speed, to generate a spreading area, where opacity of the pre-drawn line in a spreading process is negatively correlated with a spreading distance, and opacity of the spreading area is negatively correlated with a distance between the spreading area and the pre-drawn line.

The preset gesture operation is a wave operation. Generating and displaying the ink wash painting in response to the preset gesture operation includes:
stopping spreading the pre-drawn line in response to the wave operation; and
displaying the ink wash painting including at least the pre-drawn line and the spreading area.

In this embodiment of this application, the pre-drawn line has a spreading capability. In addition, in a spreading process, as a spreading distance increases, the opacity of the pre-drawn line gradually decreases. In other words, a spreading area in which a color gradually becomes lighter from the pre-drawn line to the spreading area is formed. When a spreading area formed through automatic spreading of a pre-spreading area meets a user requirement, the wave operation may be performed on the stylus in the hover state, and the pre-drawn line stops spreading. In this way, the ink wash painting with a spreading effect is generated by using the stylus.

Optionally, the preset gesture operation is a shake operation. Generating and displaying the ink wash painting in response to the preset gesture operation includes:
determining an ink dot generation central point and determining an ink dot spreading distance in response to the shake operation;
determining an ink dot size based on a current ink output;
generating an original ink dot at the ink dot generation central point based on the ink dot size, and controlling the original ink dot to radially spread the ink dot spreading distance, to generate a radial ink dot; and
displaying the ink wash painting including at least the radial ink dot.

In this embodiment of this application, the shake operation may be performed on the stylus in the hover state, and then the ink dot generation central point and the ink dot spreading distance are determined based on a related feature of the shake operation. In addition, a size of a to-be-generated ink dot may be considered to be related to a current ink output of the stylus. In this case, an original ink dot of a specific size may be generated at the ink dot generation central point, and the original ink dot is controlled to radially spread, to form the radial ink dot. In this way, the ink wash painting with an ink dripping effect is generated by using the stylus.

Optionally, a spatial coordinate system is established by using a preset reference point on a display of the electronic device as a reference. Determining the ink dot generation central point in response to the shake operation includes:
in response to the shake operation, determining third tip spatial coordinates of a tip of the stylus at the beginning of the shake operation, and determining fourth tip spatial coordinates of the tip of the stylus at ending of the shake operation;
projecting the third tip spatial coordinates onto the display, to obtain a third projection point, and projecting the fourth tip spatial coordinates onto the display, to obtain a fourth projection point;
determining a projection midpoint between the third projection point and the fourth projection point; and
using the projection midpoint as the ink dot generation central point.

In this embodiment of this application, spatial coordinates of the stylus at beginning and ending of the shake operation may be all projected onto the display of the electronic device, and then a midpoint of a connection line between two projection points is used as the ink dot generation central point. In other words, the ink dot generation central point is correlated with beginning and ending of the shake operation, so that the user can adjust the shake operation based on user's actual requirements, to conveniently change the ink dot generation central point.

Optionally, determining the ink dot spreading distance in response to the shake operation includes:
in response to the shake operation, calculating a spatial distance between the third tip spatial coordinates and the fourth tip spatial coordinates, and using the spatial distance as an actual shaking amplitude corresponding to the shake operation;
using a vertical component of the fourth tip spatial coordinates relative to the display as an actual dripping height at which an ink dot drips; and
determining, based on a correspondence among a dripping height, a shaking amplitude, and an ink dot spreading distance, the ink dot spreading distance corresponding to the actual dripping height and the actual shaking amplitude.

In this embodiment of this application, a vertical height at ending of the shake operation is used as a dripping height of the ink dot, and a spatial distance between beginning and ending of the shake operation is used as a shaking amplitude. The ink dot spreading distance is adjusted jointly based on the shaking height and the shaking amplitude. In other words, the user may control the shaking height and the shaking amplitude based on user's actual requirements, so that a finally presented ink dot spreading status can better fit a status of an ink dot generated based on an ink brush, to present a better visual effect.

Optionally, the stylus is performing an eyedropper function, and the preset gesture operation is a squeeze operation. Generating and displaying the ink wash painting in response to the preset gesture operation includes:
determining a closed area based on attribute information of a pre-collected pixel in response to the squeeze operation; and
performing color filling on the closed area, and generating and displaying the ink wash painting obtained through filling.

In this embodiment of this application, when the stylus is performing the eyedropper function, the squeeze operation may be performed on the stylus in the hover state, to trigger analysis on the pixel pre-collected by the stylus, so as to determine a plurality of pixels that have a same attribute as the pre-collected pixel, that is, determine one specific closed area. Then, a specific color is filled in the determined closed area, to generate the ink wash painting with a filling effect by using the stylus.

According to a second aspect, an embodiment of this application provides an interaction apparatus. The interaction apparatus is disposed in an electronic device. The electronic device supports a stylus as a corresponding input device. The interaction apparatus includes:
a detection unit, configured to: detect that the stylus is in a hover state and detect a preset gesture operation on the stylus; and
a processing unit, configured to: generate and display an ink wash painting in response to the preset gesture operation.

Optionally, the preset gesture operation is a squeeze operation performed on a body of the stylus. The processing unit is specifically configured to:
adjusting a reference ink output of the stylus in response to the squeeze operation;
determine, based on a correspondence between an ink output and opacity of a line and a correspondence between an ink output and a width of a line, reference opacity and a reference width corresponding to the reference ink output; and
generate and display a preview ink wash painting, where opacity of a line of the preview ink wash painting is the reference opacity, and a width of the line of the preview ink wash painting is the reference width.

Optionally, the interaction apparatus further includes:
an obtaining unit, configured to obtain an actual pressure value at a contact point of the stylus in response to a drawing operation of the stylus; and
a determining unit, configured to determine an actual ink output based on the actual pressure value and the reference ink output.

The processing unit is further configured to determine, based on the actual ink output, to generate and display a line combination with corresponding opacity and a corresponding width.

Optionally, the preset gesture operation is a tap operation performed on the body of the stylus. The processing unit includes:
a scatter point generation area determining unit, configured to: in response to the tap operation, determine, on a display of the electronic device, a scatter point generation area corresponding to the stylus;
a scatter point generation unit, configured to randomly generate scatter points in the scatter point generation area based on a first preset quantity; and
a display unit, configured to display the ink wash painting including at least the scatter points.

Optionally, a spatial coordinate system is established by using a preset reference point on a display of the electronic device as a reference. The scatter point generation area determining unit is specifically configured to:
determine first tip spatial coordinates of a tip of the stylus, and determine a tilt angle between the stylus and the preset reference point;
project the first tip spatial coordinates onto the display, to obtain a first projection point, and use the first projection point as a central point of the scatter point generation area;
determine a radius value of the scatter point generation area based on a vertical component of the first tip spatial coordinates relative to the display and the tilt angle; and
determine the scatter point generation area based on the central point and the radius value.

Optionally, the scatter point generation unit is specifically configured to:
divide the scatter point generation area into a second preset quantity of scatter point generation subareas; and
randomly generate and display a plurality of scatter points in each scatter point generation subarea based on a distance between each scatter point generation subarea and the central point, where a sum of quantities of scatter points in all the scatter point generation subareas is equal to the first preset quantity, a size of a scatter point in a same scatter point generation subarea is positively correlated with a distance between the scatter point generation subarea and the central point, and density and opacity of the scatter point in the same scatter point generation subarea are both negatively correlated with the distance between the scatter point generation subarea and the central point.

Optionally, the preset gesture operation is a wave operation. The processing unit includes:
a spreading unit, configured to: control, in response to the wave operation, a pre-drawn line to spread a preset spreading distance in a direction corresponding to the wave operation, to generate a spreading area, where opacity of the pre-drawn line in a spreading process is negatively correlated with the preset spreading distance, and opacity of the spreading area is negatively correlated with a distance between the spreading area and the pre-drawn line; and
a display unit, configured to display the ink wash painting including at least the pre-drawn line and the spreading area.

Optionally, the spreading unit includes:
a spacing distance determining unit, configured to: in response to the wave operation, determine an actual spacing distance between a tip of the stylus at the beginning of the wave operation and the pre-drawn line;
a spreading distance determining unit, configured to determine, based on a correspondence between a spacing distance and a preset spreading distance, the preset spreading distance corresponding to the actual spacing distance, where the spacing distance is positively correlated with the preset spreading distance; and
a line spreading unit, configured to control the pre-drawn line to spread the preset spreading distance in the direction corresponding to the wave operation, to generate the spreading area.

Optionally, the preset gesture operation is a wave operation. The processing unit includes:
a waving speed determining unit, configured to determine an actual waving speed in response to the wave operation;
a spreading speed determining unit, configured to determine, based on a correspondence between a waving speed and a spreading speed, an actual spreading speed corresponding to the actual waving speed, where the waving speed is positively correlated with the spreading speed;
a spreading unit, configured to control a pre-drawn line to spread at the actual spreading speed in a direction corresponding to the wave operation, to generate a spreading area, where opacity of the pre-drawn line in a spreading process is negatively correlated with the preset spreading distance, and opacity of the spreading area is negatively correlated with a distance between the spreading area and the pre-drawn line; and
a display unit, configured to: in response to reaching preset spreading time, stop spreading the pre-drawn line, and generate and display the ink wash painting including at least the pre-drawn line and the spreading area.

Optionally, the interaction apparatus further includes:
a spacing distance determining unit, configured to determine an actual spacing distance between a tip of the stylus at the beginning of the wave operation and the pre-drawn line.

The spreading speed determining unit is specifically configured to:
determine, based on the correspondence between a waving speed and a spreading speed/a correspondence between a spacing distance and a spreading speed, the actual spreading speed corresponding to the actual waving speed/the actual spacing distance, where the spacing distance is positively correlated with the spreading speed.

Optionally, a spatial coordinate system is established by using a preset reference point on a display of the electronic device as a reference. The spacing distance determining unit is specifically configured to:
project the second tip spatial coordinates onto the display, to obtain a second projection point;
determine a point-line distance between the second projection point and the pre-drawn line; and
use the point-line distance as the actual spacing distance.

Optionally, the interaction apparatus further includes:
an automatic spreading unit, configured to control a pre-drawn line to spread in a preset spreading direction at a preset spreading speed, to generate a spreading area, where opacity of the pre-drawn line in a spreading process is negatively correlated with a spreading distance, and opacity of the spreading area is negatively correlated with a distance between the spreading area and the pre-drawn line.

The preset gesture operation is a wave operation. The processing unit is specifically configured to:
stop spreading the pre-drawn line in response to the wave operation; and
display the ink wash painting including at least the pre-drawn line and the spreading area.

Optionally, the preset gesture operation is a shake operation. The processing unit includes:
an ink dot generation center determining unit, configured to determine an ink dot generation central point in response to the shake operation;
an ink dot spreading distance determining unit, configured to determine an ink dot spreading distance in response to the shake operation;
an ink dot size determining unit, configured to determine an ink dot size based on a current ink output;
an ink dot generation and spreading unit, configured to: generate an original ink dot at the ink dot generation central point based on the ink dot size, and control the original ink dot to radially spread the ink dot spreading distance, to generate a radial ink dot; and
a display unit, configured to display the ink wash painting including at least the radial ink dot.

Optionally, a spatial coordinate system is established by using a preset reference point on a display of the electronic device as a reference. The ink dot generation center determining unit is specifically configured to:
in response to the shake operation, determine third tip spatial coordinates of a tip of the stylus at the beginning of the shake operation, and determine fourth tip spatial coordinates of the tip of the stylus at ending of the shake operation;
project the third tip spatial coordinates onto the display, to obtain a third projection point, and project the fourth tip spatial coordinates onto the display, to obtain a fourth projection point;
determine a projection midpoint between the third projection point and the fourth projection point; and
use the projection midpoint as the ink dot generation central point.

Optionally, the ink dot spreading distance determining unit is specifically configured to:
in response to the shake operation, calculate a spatial distance between the third tip spatial coordinates and the fourth tip spatial coordinates, and use the spatial distance as an actual shaking amplitude corresponding to the shake operation;
use a vertical component of the fourth tip spatial coordinates relative to the display as an actual dripping height at which an ink dot drips; and
determine, based on a correspondence among a dripping height, a shaking amplitude, and an ink dot spreading distance, the ink dot spreading distance corresponding to the actual dripping height and the actual shaking amplitude.

Optionally, the stylus is performing an eyedropper function, and the preset gesture operation is a squeeze operation. The processing unit is specifically configured to:
determine a closed area based on attribute information of a pre-collected pixel in response to the squeeze operation; and
perform color filling on the closed area, and generate and display the ink wash painting obtained through filling.

According to a third aspect, an embodiment of this application further provides an electronic device. The electronic device includes:
at least one processor; and
a memory coupled to the processor.

The at least one processor is configured to implement the steps in the method according to any one of the embodiments of the first aspect when executing a computer program stored in the memory.

According to a fourth aspect, an embodiment of this application provides a computer-readable storage medium. The computer-readable storage medium stores a computer program. When the computer program is executed by a processor, the method according to any one of the embodiments of the first aspect is implemented.

It should be understood that technical solutions in the second aspect to the fourth aspect of embodiments of this application are consistent with the technical solution in the first aspect of embodiments of this application, and beneficial effects achieved by the aspects and corresponding feasible implementations are similar. Details are not described again.

### BRIEF DESCRIPTION OF DRAWINGS

To describe technical solutions in embodiments of this application more clearly, the following briefly introduces the accompanying drawings used in describing embodiments. It is clearly that the accompanying drawings in the following descriptions show merely some embodiments of this specification, and a person of ordinary skill in the art may still derive other drawings from these accompanying drawings without creative efforts.
FIG. 1 is a schematic flowchart of an interaction method according to an embodiment of this application;
FIG. 2 is a schematic flowchart of a method for generating a preview ink wash painting according to an embodiment of this application;
FIG. 3 is a diagram of performing a squeeze operation on a stylus according to an embodiment of this application;
FIG. 4 is a diagram of preview ink wash paintings corresponding to different reference ink outputs according to an embodiment of this application;
FIG. 5 is a schematic flowchart of a method for drawing a line by using a stylus according to an embodiment of this application;
FIG. 6 is a schematic flowchart of a method for generating a scatter point effect according to an embodiment of this application;
FIG. 7 is a diagram of performing a tap operation on a stylus according to an embodiment of this application;
FIG. 8 is a schematic flowchart of a method for determining a scatter point generation area according to an embodiment of this application;
FIG. 9 is a diagram of a scatter point generation area according to an embodiment of this application;
FIG. 10 is a diagram of generating a scatter point effect according to an embodiment of this application;
FIG. 11 is a schematic flowchart of a scatter point generation method according to an embodiment of this application;
FIG. 12 is a diagram of a change of a scatter point attribute with a distance according to an embodiment;
FIG. 13 is a schematic flowchart of a method for generating an ink wash painting with a spreading effect according to an embodiment of this application;
FIG. 14 is a diagram of performing a wave operation on a stylus according to an embodiment of this application;
FIG. 15 is a diagram of spreading a pre-drawn line to form a spreading area according to an embodiment of this application;
FIG. 16 is a schematic flowchart of a method for controlling spreading of a pre-drawn line based on a distance between a stylus and the pre-drawn line according to an embodiment of this application;
FIG. 17 is a schematic flowchart of a method for calculating a spacing distance between a tip of a stylus and a pre-drawn line according to an embodiment of this application;
FIG. 18 is a diagram of a spreading effect in a plurality of pre-drawn lines according to an embodiment of this application;
FIG. 19 is a schematic flowchart of another method for generating an ink wash painting with a spreading effect according to an embodiment of this application;
FIG. 20 is a schematic flowchart of a spreading speed control method according to an embodiment of this application;
FIG. 21 is a schematic flowchart of another method for generating an ink wash painting with a spreading effect according to an embodiment of this application;
FIG. 22 is a schematic flowchart of a method for generating an ink wash painting with an ink dripping effect according to an embodiment of this application;
FIG. 23 is a diagram of performing a shake operation on a stylus according to an embodiment of this application;
FIG. 24 is a schematic flowchart of a method for determining an ink dot generation center according to an embodiment of this application;
FIG. 25 is a schematic flowchart of a method for determining an ink dot spreading distance according to an embodiment of this application;
FIG. 26 is a diagram of radial ink dots according to an embodiment of this application;
FIG. 27 is a schematic flowchart of a method for generating an ink wash painting with a filling effect according to an embodiment of this application;
FIG. 28 is a diagram of color filling according to an embodiment of this application;
FIG. 29 is a diagram of a structure of an interaction apparatus according to an embodiment of this application; and
FIG. 30 is a diagram of a structure of an electronic device according to an embodiment of this application.

### DESCRIPTION OF EMBODIMENTS

For better understanding of technical solutions of this specification, the following describes embodiments of this application in detail with reference to accompanying drawings.

It should be noted that the described embodiments are merely some but not all of embodiments of this specification. All other embodiments obtained by a person of ordinary skill in the art based on embodiments of this specification without creative efforts shall fall within the protection scope of this specification.

Terms used in embodiments of this application are merely for the purpose of describing specific embodiments, but are not intended to limit this specification. The terms "a", "said" and "the" of singular forms used in embodiments and the appended claims of this application are also intended to include plural forms, unless otherwise specified in the context clearly.

The following describes ink brush painting techniques used in embodiments of this application.

Ink spreading technique: The ink spreading technique mainly includes an ink blowing technique and an ink swinging technique. The ink blowing technique is to spread ink by blowing air, to achieve blurred and gradient effects of textures. The ink blowing technique is mainly used for large-scale and expansive ink spreading, and is commonly used to depict vast landscapes, mist, or clouds. The ink swinging technique is to splash and spread ink by swinging tools (such as ink brushes and fans), to achieve blurred and gradient effects of textures. The ink swinging technique is used for small-scale localized detail rendering, and is commonly used to depict delicate textures such as leaves or petals.

Dot dyeing technique: The dot dyeing technique is to dip an appropriate amount of ink onto an ink brush, a brush, or a bamboo stick, and then, gently dab, paint, or twist the ink brush on paper, so that ink forms dot patterns on the paper. In the dot dyeing technique, various textures such as stone patterns, tree bark patterns, and fabric patterns can be created in an ink wash painting. The dot dyeing technique can also be used to depict natural scenery such as starry skies, flowers, and raindrops.

Ink dripping technique: The ink dripping technique is to create works by dripping or splashing ink on paper. In the ink dripping technique, rich and diverse forms and texture effects are achieved by controlling a speed, an angle, and a position of ink dripping. A principle of the ink dripping technique is based on fluidity and wettability of ink. When ink drips or splashes, due to gravity and friction of an ink dot, ink freely spreads and permeates the paper, forming transparent and rich textural effects. Forms and textures formed through ink spreading are unpredictable and uncontrollable. Therefore, the ink dripping technique has a specific randomness and element of surprise. The ink dripping technique has wide application scenarios. In an ink wash painting, the ink dripping technique can be used to depict natural scenery, for example, depict graceful movement and fluidity of water droplets, raindrops, and petals.

Currently, for an electronic device configured with a display, in addition to supporting a touch command or a voice command of a user as an input, the electronic device may further support a stylus as an input device for input. However, when the stylus is used for input, the stylus can usually be used for text recording and marking, drawing a flowchart, drawing a mind map, and the like. In the foregoing scenarios, when the stylus is used to input information, the stylus simulates writing experience of a hard pen style. However, the user is usually not limited to using the stylus for office work. For example, the user further wants to draw an ink wash painting by using the stylus, but the hard-pen style is not suitable for drawing the ink wash painting. In other words, when the stylus is used as an input device, a writing style that can be input by the stylus is simple, and cannot meet requirements of the user in different scenarios. As a result, user experience is poor.

In view of this, an embodiment of this application provides an interaction method. In the method, a stylus is placed in a hover state, and then a simple gesture operation is performed on the stylus in the hover state, so that an ink wash painting can be generated and displayed on an electronic device matching the stylus. This expands a writing style of the stylus, which is equivalent to expanding an interaction function between the stylus and the electronic device, thereby meeting a requirement of a user for drawing the ink wash painting on the electronic device, and improving user experience.

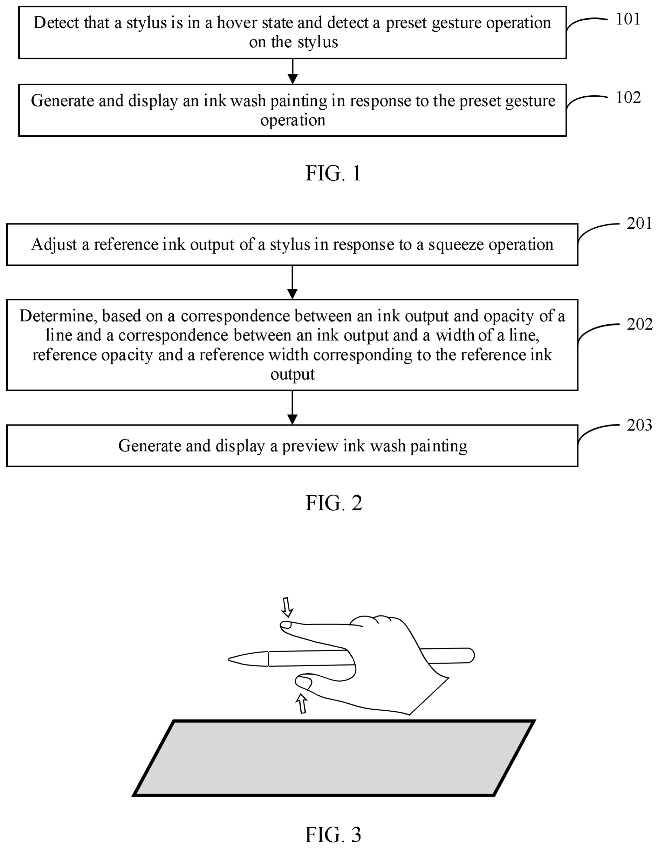

With reference to the accompanying drawings, the following describes the technical solutions provided in embodiments of this application. Refer to FIG. 1. An embodiment of this application provides an interaction method. The method is applied to an electronic device. The electronic device has a display and supports a stylus as an input device. For example, the electronic device may be a smartphone, a tablet computer, or an e-reader. This is not particularly limited herein. The electronic device may be connected to the stylus based on Bluetooth, or may be connected to the stylus based on wireless-fidelity (Wireless-Fidelity, Wi-Fi). A connection manner is not particularly limited herein. A procedure of the method is described as follows.

Step 101: Detect that the stylus is in a hover state and detect a preset gesture operation on the stylus.

In this embodiment of this application, the hover state may be considered as a state in which a distance between the stylus and the electronic device is greater than 0 and less than a specified threshold, that is, may be considered as a state in which the stylus and the electronic device are close to and not in contact with each other. For example, when the distance between the stylus and the electronic device is (0, 14 mm), the following describes in detail how the electronic device detects that the stylus is in the hover state.

Manner 1: Determine, based on electromagnetic induction, that the stylus is in the hover state.

For example, an electromagnetic transmitter is mounted in a tip of the stylus, and can transmit an electromagnetic signal. An electromagnetic sensor is mounted in the electronic device, and can receive the electromagnetic signal from the tip of the stylus, and then determine, based on strength of the received electromagnetic signal, whether the stylus is in the hover state. For example, when the electromagnetic sensor in the electronic device detects that the strength of the electromagnetic signal is lower than specified strength, it is determined that the stylus is in the hover state.

Manner 2: Determine, based on a distance, that the stylus is in the hover state.

For example, an infrared sensor is mounted in the electronic device. An infrared light beam is emitted, and time from emitting the infrared light beam to reflecting the infrared light beam back to the sensor is measured. When the stylus hovers above a screen, the infrared light beam is blocked by the tip. As a result, the measured reflection time changes. If the reflection time exceeds specified time, it is determined that the stylus is in the hover state. Alternatively, the distance between the stylus and the electronic device is further determined based on the reflection time. When the distance is greater than a specified distance, it is determined that the stylus is in the hover state.

For another example, an ultrasonic pen sensor is mounted in the electronic device. An ultrasonic wave is transmitted, and time from transmitting the ultrasonic wave to reflecting the ultrasonic wave back to the sensor is measured. When the stylus hovers above a screen, the ultrasonic wave is blocked by the tip. As a result, the measured reflection time changes. If the reflection time exceeds specified time, it is determined that the stylus is in the hover state. Alternatively, the distance between the stylus and the electronic device is further determined based on the reflection time. When the distance is greater than a specified distance, it is determined that the stylus is in the hover state.

Manner 3: Determine, based on an acceleration, that the stylus is in the hover state.

For example, an acceleration sensor is mounted in the electronic device. The acceleration sensor may be configured to detect an acceleration of the stylus when the stylus slides on the electronic device. When the acceleration detected by the acceleration sensor is 0, it is determined that the stylus is in the hover state.

It should be understood that, in addition to the foregoing three detection mechanisms, whether the stylus is in the hover state may be determined based on another mechanism, for example, may be determined based on a capacitance change or by analyzing an image captured by a camera. This is not particularly limited herein. In addition, when whether the stylus is in the hover state is determined, any one of the foregoing mechanisms may be used for determining, or a combination of a plurality of mechanisms may be used for determining. This is not particularly limited herein.

After it is determined that the stylus is in the hover state, whether the preset gesture operation is performed on the stylus may be further detected. The preset gesture operation herein may be considered as an operation similar to an operation of actually using an ink brush to draw an ink wash painting, so that a user who is accustomed to using the ink brush for painting can adapt, in a short period of time, to drawing by using the stylus. After the user performs the preset gesture operation on the stylus, an internal touch sensor inside the stylus generates a touch signal, and sends the touch signal to the electronic device through Bluetooth or a Wi-Fi direct connection.

Step 102: Generate and display an ink wash painting in response to the preset gesture operation.

In this embodiment of this application, after detecting that the stylus is in the hover state, and determining, based on the touch signal, that the user performs the preset gesture operation on the stylus, the electronic device may generate and display, on the display, the ink wash painting that corresponds to the preset gesture operation and that has a specific visual effect.

In some embodiments, there are a plurality of visual effects that need to be presented when the ink wash painting is drawn. Therefore, correspondingly, a plurality of preset gesture operations need to be designed to correspond to the visual effects. The following describes in detail different visual effects presented in different preset gesture operations.

Visual effect 1: Preview opacity of a line and a width of the line.

FIG. 2 is a schematic flowchart of a method for generating a preview ink wash painting according to an embodiment of this application. Step 102 may be specifically implemented by performing sub-steps 201 to 203.

Step 201: Adjust a reference ink output of the stylus in response to a squeeze operation.

In a process of drawing the ink wash painting by using the ink brush, the user needs to dip ink for painting. An amount of ink dipped determines opacity (namely, a color depth of a line) and a width of the line presented on painting paper in a subsequent painting process. It should be understood that a larger amount of ink indicates higher opacity and a deeper color of the line. A smaller amount of ink indicates lower opacity and a lighter color of the line. Similarly, more ink dipped indicates that ink is more likely to spread on the painting paper, and the drawn line is thicker. On the contrary, less ink dipped indicates that ink is less likely to spread on the painting paper, and the drawn line is thinner.

In this embodiment of this application, because the stylus cannot directly dip into the ink, the stylus may simulate a process of sucking liquid by using a "sucking tube" to adjust the reference ink output of the stylus. When a squeezing ball in the "sucking tube" is squeezed and then released, external liquid enters the squeezing ball and a tube body of the "sucking tube" due to a pressure difference. In other words, a liquid amount in the "sucking tube" is adjusted by performing the squeeze operation. Similarly, a touch sensor may be disposed at a preset position on the body of the stylus. For example, the preset position may be a middle position of the body of the stylus, or certainly may be another position that meets an operation habit of the user. This is not particularly limited herein. FIG. 3 is a diagram of performing the squeeze operation on the stylus according to an embodiment of this application. As shown in FIG. 3, when a single-tap operation from each of two fingers is detected, it may be considered that a two-finger squeeze operation is performed. Then, in response to the squeeze operation, the reference ink output may be increased based on a first specified value. For example, the first specified value is 5% of a maximum reference ink output. Each time a squeeze operation of the user is detected, the reference ink output is increased by the first specified value until the reference ink output is increased to the maximum reference ink output. It should be understood that the squeeze operation of the user may be considered to be completed in a short period of time, for example, 0.5s or 1s. When a squeeze operation performed by the user on the stylus for a long period of time is detected, for example, when it is detected that the user performs the squeeze operation on the body of the stylus for more than 3s or more than 5s, the reference ink output is decreased based on a second specified value. For example, the second specified value is 5% of the maximum reference ink output. Each time a long-time squeeze operation of the user is detected, the reference ink output is decreased by the second specified value until the reference ink output is 0. It should be understood that the first specified value and the second specified value may alternatively be different. This is not specifically limited herein.

Step 202: Determine, based on a correspondence between an ink output and opacity of a line and a correspondence between an ink output and a width of the line, reference opacity and a reference width corresponding to the reference ink output.

In this embodiment of this application, the electronic device pre-stores a correspondence between a reference ink output and both opacity of a line and a width of a line. The correspondence herein may be stored in a table. To be specific, correspondences between different reference ink outputs and both opacity and widths are stored in the table in an exhaustive manner. Alternatively, the correspondence herein may be a mathematical expression. For example, the reference ink output is a, the opacity is ka (for example, a value range of ka is [0, 1]), and the line width is ja (for example, a value range of ja is (0, 40]). Values of a, k, and j are not particularly limited herein. After determining an adjusted reference ink output, the electronic device may determine the reference opacity and the reference width of the drawn line based on the correspondence and the current reference ink output.

Step 203: Generate and display the preview ink wash painting.

An object adjusted by the user is the ink output of the stylus. However, in an actual ink wash painting drawing process, an ink output directly affects opacity and a width of a drawn line. Therefore, in this embodiment of this application, to enable the user to more intuitively determine whether the adjusted reference ink output is appropriate, that is, whether opacity and a line width used in a subsequent drawing process are appropriate, the preview ink wash painting may be generated and displayed on the display of the electronic device. The preview ink wash painting displayed herein is not actually drawn by the user, but is obtained by replacing opacity in a prestored ink wash painting template with the reference opacity determined in step 1022 and replacing a line width in the ink wash painting template with the reference width determined in step 1022, to serve as a basis for the user to determine whether the adjusted reference ink output is appropriate.

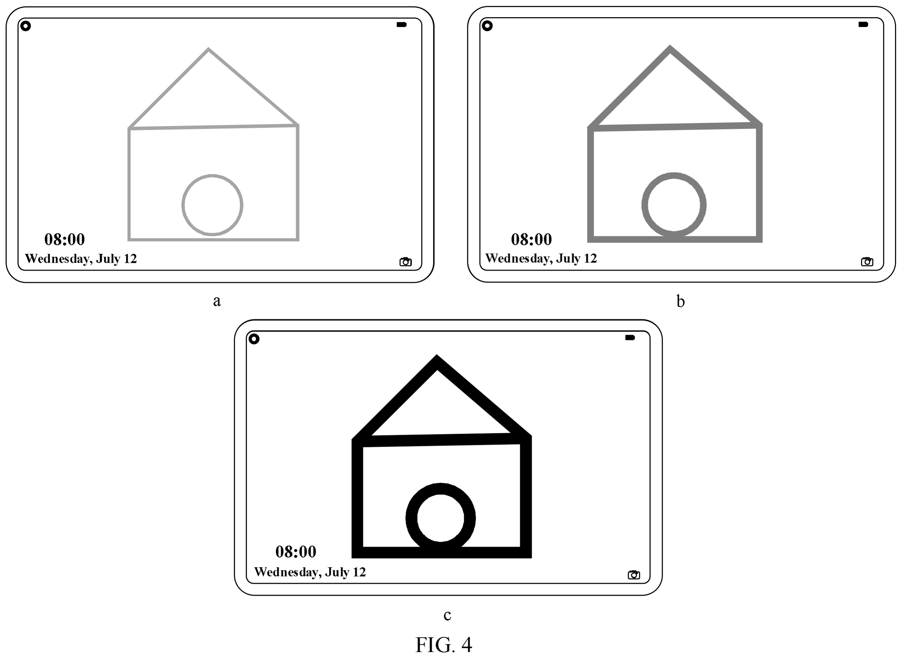

FIG. 4 is a diagram of preview ink wash paintings corresponding to different reference ink outputs according to an embodiment of this application. As shown in a in FIG. 4, when the reference ink output is 30%, the opacity of the line is 0.3, and the width of the line is 10 px. As shown in b in FIG. 4, when the reference ink output is 50%, the opacity of the line is 0.5, and the width of the line is 20 px. As shown in c in FIG. 4, when the reference ink output is 70%, the opacity of the line is 0.7, and the width of the line is 30 px.

In some embodiments, after determining that the adjusted reference ink output is appropriate, the user may touch the display of the electronic device through the stylus to draw a related line in an ink wash painting. In a process of drawing by using an ink brush, a degree of force applied by the user when the user performs drawing also affects an ink output of the ink brush, and further indirectly affects opacity and a line width of a drawn line. Therefore, in a process of drawing by using the stylus, a degree of force applied by the user when the user performs drawing may also be correlated with the ink output of the stylus, so that the user can control, based on a requirement of the user, opacity and a thickness of a finally presented line. This improves user experience.

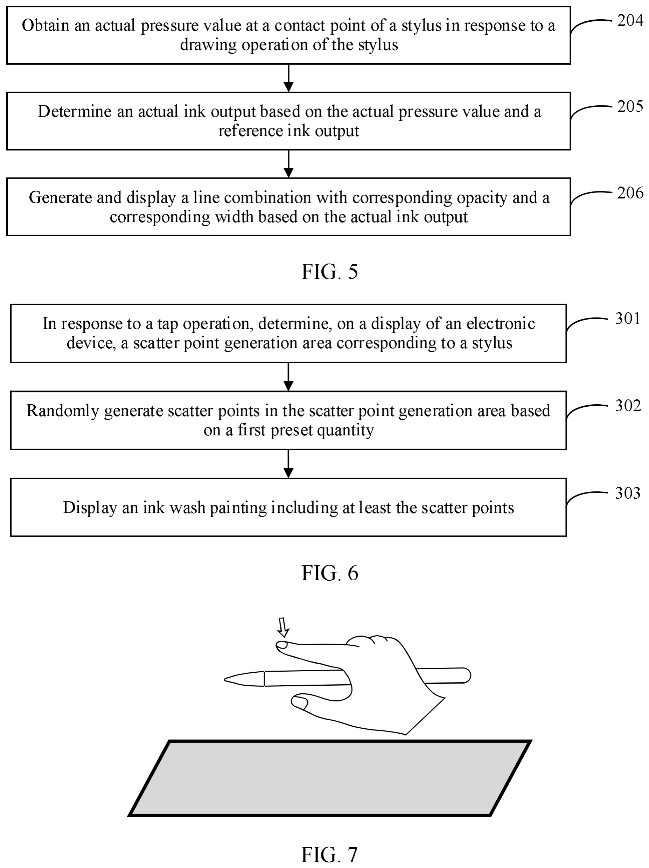

FIG. 5 is a schematic flowchart of a method for drawing a line by using the stylus according to an embodiment of this application. After step 203 is performed, step 204 to step 206 may be further performed.

Step 204: Obtain an actual pressure value at a contact point of the stylus in response to a drawing operation of the stylus.

In this embodiment of this application, in an actual drawing process by using the stylus, a tip of the stylus is in contact with the display of the electronic device. In a possible implementation, a pressure sensor may be mounted in the tip of the stylus, and a pressure value at the contact point of the stylus may be detected through the pressure sensor. The pressure value may represent a degree of force applied by the user. A greater pressure value indicates that the degree of the force applied by the user is greater. A smaller pressure value indicates that the degree of the force applied by the user is smaller. Then, the stylus may send, to the electronic device, the actual pressure value detected by the internal pressure sensor, so that the electronic device can learn of the degree of the force applied by the user when the user performs drawing. Certainly, a pressure sensor may be directly mounted in the display of the electronic device. In this way, the electronic device can directly obtain the actual pressure value. How to obtain the actual pressure value is not particularly limited herein.

Step 205: Determine an actual ink output based on the actual pressure value and the reference ink output.

In this embodiment of this application, the reference ink output may be considered as an ink output at a standard pressure value. When the actual pressure value is less than the standard pressure value, the actual ink output is less than the reference ink output. When the actual pressure value is greater than the standard pressure value, the actual ink output is greater than the reference ink output. Therefore, the user may use the reference ink output as a reference, and change the actual ink output by changing a pressure value applied to the display of the electronic device, to better meet a requirement for opacity and a width of a line in actual drawing.

For example, the reference ink output corresponding to the standard pressure value of 0.5 Pa is 50%. If the actual pressure value is 0.7 Pa, the actual ink output is 70%. If the actual pressure value is 0.3 Pa, the actual ink output is 30%.

Step 206: Generate and display a line combination with corresponding opacity and a corresponding width based on the actual ink output.

In this embodiment of this application, because there is a correspondence between a reference ink output and both opacity and width of a line, after the actual ink output is determined, the foregoing correspondence may still be used to determine the actual opacity and the actual width of the line corresponding to the actual ink output, and display the drawn related line on the display of the electronic device.

Visual effect 2: Generate a scatter point effect.

FIG. 6 is a schematic flowchart of a method for generating the scatter point effect according to an embodiment of this application. Step 102 may be specifically implemented by performing sub-steps 301 to 303.

Step 301: In response to a tap operation, determine, on the display of the electronic device, a scatter point generation area corresponding to the stylus.

In the process of drawing the ink wash painting by using the ink brush, after dipping a specific amount of ink into the ink brush, the user may tap another object, for example, another ink brush that does not dip ink, by using the ink brush that dips ink. Then, the ink brush that dips ink is shaken, and the ink dipped into the ink brush is dispersed into small ink dots and splashed onto a painting paper, to form a scatter point effect on the painting paper.

In this embodiment of this application, when the stylus is used for drawing, a tap operation on the stylus may also be simulated. For example, a touch sensor is mounted at a preset position in the body of the stylus. The preset position may be a middle position of the body of the stylus, or may be a front 1/4 position of the stylus with the tip as a reference. The preset position is not particularly limited herein. FIG. 7 is a diagram of performing a tap operation on the stylus according to an embodiment of this application. As shown in FIG. 7, when detecting a single-tap operation of a single finger of the user, the touch sensor disposed in the body of the stylus may determine the single-tap operation as a tap operation. Then, the stylus may send, to the electronic device through Bluetooth or a Wi-Fi direct connection, a touch signal representing the tap operation. After receiving the touch signal, the electronic device may learn that the user currently performs the tap operation on the stylus.

After determining that the user performs the tap operation on the stylus in the hover state, the electronic device further determines, on the display, the scatter point generation area corresponding to the stylus.

In some embodiments, when the ink brush is used to generate a scatter point, a scatter point generation position is usually related to a hover position in the air of a tip that is of the ink brush and that dips ink. The user may adjust the hover position of the tip of the ink brush to adjust a scatter point generation area. Therefore, in this embodiment of this application, the scatter point generation area may also be determined based on a hover position of the tip of the stylus.

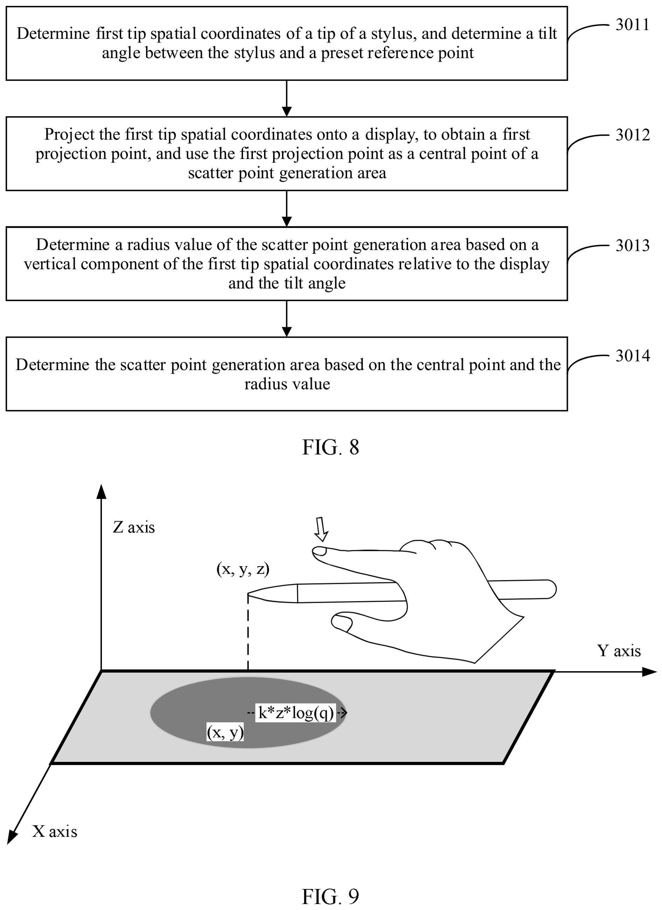

FIG. 8 is a schematic flowchart of a method for determining the scatter point generation area according to an embodiment of this application. Step 301 may be specifically implemented by performing sub-steps 3011 to 3014.

Step 3011: Determine first tip spatial coordinates of the tip of the stylus, and determine a tilt angle between the stylus and a preset reference point.

In this embodiment of this application, a spatial coordinate system is established by using the preset reference point on the display of the electronic device as a reference. For example, the preset reference point may be an upper left corner, a lower left corner, an upper right corner, or a lower right corner of the display, or a central point of the display. This is not particularly limited herein. In addition, a width direction of the display may be used as an X axis, a height direction of the display may be used as a Y axis, and a vertical direction of the display may be used as a Z axis. Certainly, alternatively, a height direction of the display may be used as an X axis, a width direction may be used as a Y axis, and a vertical direction may be used as a Z axis. This is not particularly limited herein.

For example, the tip of the stylus is mounted with an electromagnetic transmitter, and the electronic device is mounted with an electromagnetic sensor. The electromagnetic transmitter in the tip of the stylus may transmit an electromagnetic signal, and the electromagnetic sensor in the electronic device may receive the electromagnetic signal and detect strength and a time delay of the electromagnetic signal. Then, the electronic device may analyze and process the strength and the time delay of the electromagnetic signal, and then determine the first tip spatial coordinates of the tip of the stylus by using a related algorithm.

For example, in a time domain inversion algorithm, a position is calculated by using the time delay of the electromagnetic signal in propagation, and the first tip spatial coordinates of the tip of the stylus are determined by measuring a signal propagation time difference. In a multipoint positioning algorithm, an electromagnetic wave signal is measured by using a plurality of sensors, and spatial coordinates of the tip of the stylus are determined through triangulation positioning or by using another geometric calculation method. A model matching algorithm is a method of matching the received electromagnetic signal with a prestored model. The first tip spatial coordinates of the tip of the stylus may be determined by determining matching degrees between the received electromagnetic signal and different positional models through comparison. Certainly, alternatively, the first spatial coordinates of the stylus may be determined by using another algorithm. This is not particularly limited herein.

In addition, a gyroscope is configured in each of the stylus and the electronic device. The stylus may send, to the electronic device, information such as an angular velocity detected by the gyroscope of the stylus. After receiving the angular velocity information of the stylus, the electronic device may perform fusion based on angular velocity information detected by the gyroscope of the electronic device and data from other sensors (an acceleration sensor and an electromagnetic sensor), to obtain fusion data. Then, a tilt angle of the stylus is calculated based on a posture resolving algorithm and the fusion data. For example, the posture resolving algorithm may be an extended Kalman filter algorithm, a Mahony filter algorithm, a complementary filter algorithm, or the like. This is not particularly limited herein.

Step 3012: Project the first tip spatial coordinates onto the display, to obtain a first projection point, and use the first projection point as a central point of the scatter point generation area.

Step 3013: Determine a radius value of the scatter point generation area based on a vertical component of the first tip spatial coordinates relative to the display and the tilt angle.

When the ink brush is used to generate the scatter point, the scatter point generation area corresponding to the ink brush may be approximately considered as a circular area radiated by the tip of the ink brush. Therefore, in this embodiment of this application, when the stylus is used to generate the scatter point, the scatter point generation area corresponding to the stylus may also be a circular area.

Specifically, after the first tip spatial coordinates of the tip of the stylus and the tilt angle of the stylus are determined, the first tip spatial coordinates may be projected onto a plane on which the display of the electronic device is located, to determine the first projection point. Then, the first projection point is used as the central point of the scatter point generation area. In this way, it may be simulated that the scatter point generation area is correlated with a position of the tip of the stylus when the ink brush is used to draw a picture. On this basis, the radius value of the scatter point generation area is determined jointly based on the tilt angle of the stylus and the vertical component of the first tip spatial coordinates relative to the display, namely, a vertical height of the tip of the stylus relative to the display.

FIG. 9 is a diagram of the scatter point generation area according to an embodiment of this application. As shown in FIG. 9, the first spatial coordinates of the tip of the stylus are (x, y, z). In this case, coordinates of the first projection point of the first spatial coordinates on the display are (x, y). In other words, the central point of the scatter point generation area is (x, y). If the tilt angle of the stylus is q, the radius value is k*z*log(q), where k is a proportionality coefficient, and a base of a log function is (0, 1). The radius value is positively correlated with z. To be specific, a greater z indicates a greater radius value, and a smaller z indicates a smaller radius value. The radius value is negatively correlated with q. When the tilt angle is closer to 0 degrees, the radius value is greater. When the tilt angle is closer to 90 degrees, the radius value is smaller.

Step 3014: Determine the scatter point generation area based on the central point and the radius value.

In this embodiment of this application, after the central point and the radius value of the scatter point generation area are separately determined, the scatter point generation area may be determined.

Step 302: Randomly generate scatter points in the scatter point generation area based on a first preset quantity.

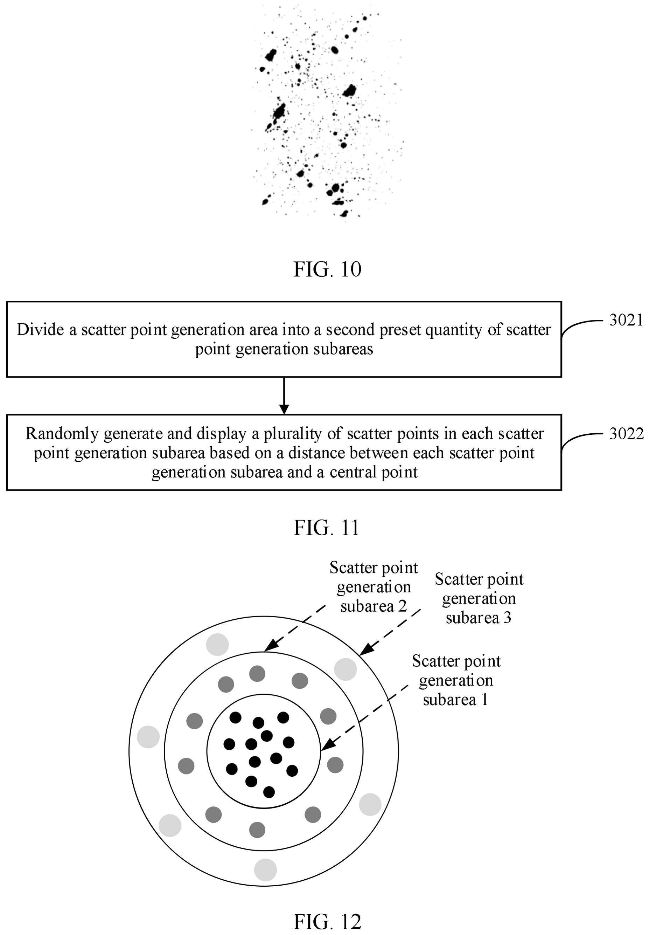

FIG. 10 is a diagram of generating a scatter point effect according to an embodiment of this application. Each time the user taps the stylus, it may be considered that the first preset quantity of scatter points are generated. A color of the scatter point herein may be any color selected in advance. This is not specifically limited herein. If a large quantity of scatter points need to be generated, a plurality of tap operations may be performed on the stylus.

The first preset quantity of scatter points are distributed in the entire scatter point generation area according to a specified rule.

FIG. 11 is a schematic flowchart of a scatter point generation method according to an embodiment of this application. Step 302 may be specifically implemented by performing sub-steps 3021 and 3022.

Step 3021: Divide the scatter point generation area into a second preset quantity of scatter point generation subareas.

Step 3022: Randomly generate and display a plurality of scatter points in each scatter point generation subarea based on a distance between each scatter point generation subarea and the central point.

In this embodiment of this application, for the second preset quantity of scatter point generation subareas, scatter points in a same scatter point generation subarea may be considered to be relatively close to the central point. Therefore, attributes of the scatter points in the same scatter point generation subarea are set to be the same. It may be considered that a difference between distances between different scatter point generation subareas and the central point is relatively large. Therefore, attributes of scatter points in different scatter point generation subareas are set to be different, so that a finally presented scatter point status can better fit a status of a scatter point generated based on the ink brush, and a better visual effect is presented. It should be understood that a sum of quantities of scatter points in the second preset quantity of scatter point generation subareas is equal to the first preset quantity.

For example, an attribute of a scatter point may be considered as a size, density, and opacity of the scatter point. A size of a scatter point in a same scatter point generation subarea is positively correlated with a distance between the scatter point generation subarea and the central point. To be specific, for a scatter point generation subarea, if the scatter point generation subarea is closer to the central point, a scatter point in the scatter point generation subarea is smaller, or if the scatter point generation subarea is farther from the central point, a scatter point in the scatter point generation subarea is larger. Density and opacity of scatter points in a same scatter point generation subarea are negatively correlated with a distance between the scatter point generation subarea and the central point. To be specific, for a scatter point generation subarea, if the scatter point generation subarea is closer to the central point, density of scatter points in the scatter point generation subarea is higher (that is, the scatter points are denser), and opacity of the scatter point is higher (that is, a color is deeper), or if the scatter point generation subarea is farther from the central point, density of scatter points in the scatter point generation subarea is lower (that is, the scatter points are sparser), and opacity of the scatter point is lower (that is, a color is lighter).

FIG. 12 is a diagram of a change of a scatter point attribute with a distance according to an embodiment of this application. As shown in FIG. 12, the scatter point generation area is divided into three subareas: a scatter point generation subarea 1, a scatter point generation subarea 2, and a scatter point generation subarea 3. The scatter point generation subarea 1 is closest to the central point, and the scatter point generation subarea 3 is farthest from the central point. Scatter points in the scatter point generation subarea 1 are the smallest, have the highest density, and have the highest opacity. Scatter points in the scatter point generation subarea 3 are the largest, have the lowest density, and have the lowest opacity. Sizes, density, and opacity of scatter points in the scatter point generation subarea 2 are all between those of the scatter point generation subarea 1 and those of the scatter point generation subarea 3.

Step 303: Display the ink wash painting including at least the scatter points.

In this embodiment of this application, the display of the electronic device may include a pre-drawn unfinished ink wash painting. The unfinished ink wash painting is superimposed with the scatter point effect, to form a complete ink wash painting. Alternatively, the scatter point herein may be a basis for subsequently drawing another element. The user may further perform processing based on the scatter point, to form the complete ink wash painting.

For example, the unfinished ink wash painting includes only a branch of wintersweet, and a superimposed scatter point is equivalent to a flower of the wintersweet, to form a complete ink wash painting of the wintersweet.

Visual effect 3: Generate a spreading effect.

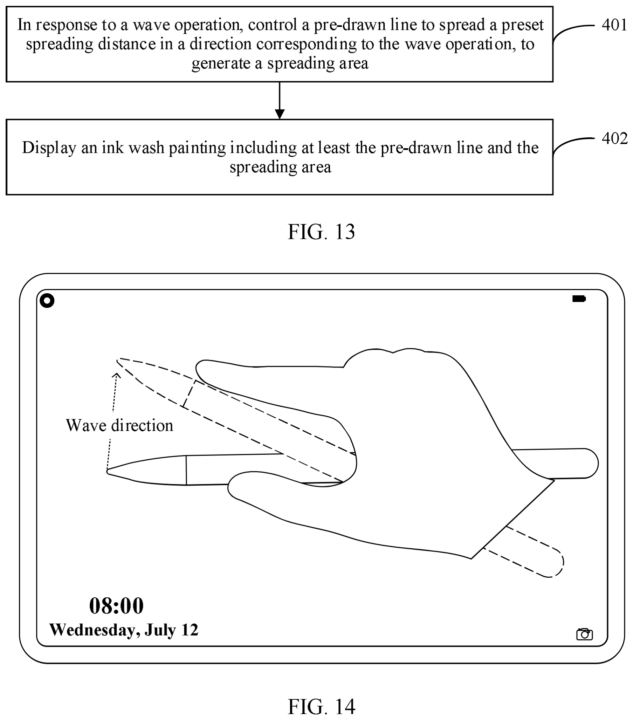

FIG. 13 is a schematic flowchart of a method for generating an ink wash painting with a spreading effect according to an embodiment of this application. Step 102 may be specifically implemented by performing sub-steps 401 and 402.

Step 401: In response to a wave operation, control a pre-drawn line to spread a preset spreading distance in a direction corresponding to the wave operation, to generate a spreading area.

In this embodiment of this application, a spatial coordinate system is established by using a preset reference point on the display of the electronic device as a reference, and tip spatial coordinates of the tip of the stylus are determined in the spatial coordinate system. For details about how to establish the spatial coordinate system and how to determine the tip spatial coordinates, refer to the solution recorded in step 3011. Details are not described herein again. FIG. 14 is a diagram of performing the wave operation on the stylus according to an embodiment of this application. As shown in FIG. 14, if the electronic device detects that the tip spatial coordinates of the tip of the stylus continuously change in a direction within specified duration, and movement trajectories formed between every two of tip spatial coordinates are approximately parallel or completely parallel, it may be determined that the preset gesture operation performed by the user on the stylus is the wave operation. On this basis, the electronic device may control the pre-drawn line to spread the preset spreading distance in the direction corresponding to the wave operation (that is, the pre-drawn line spreads at a preset spreading speed until preset spread time is reached, and then the spreading stops), to form the spreading area. In other words, each time the electronic device detects a wave operation of the user, the electronic device controls the pre-drawn line to spread the preset spreading distance in a waving direction, until a spread degree that meets a visual effect of the user is achieved. A value of the preset spreading distance is not particularly limited herein.

It should be understood that, in a spreading process of a line drawn by using the ink brush, because an amount of ink of the drawn line is fixed, in the spreading process, as a spreading distance increases, opacity of the line at a spreading start point is decreased due to a decrease in the amount of ink. Therefore, when a spreading effect is achieved by using the wave operation on the stylus, in a spreading process of the pre-drawn line, the electronic device may also simulate that the opacity of the pre-drawn line is negatively correlated with the preset spreading distance, and simulate that the opacity in the spreading area is negatively correlated with a distance between the pre-drawn line and the spreading area. In other words, a color of the pre-drawn line is darkest, a color in the spreading area gradually becomes lighter, and a color at an edge that is in the spreading area and that is far away from the pre-drawn line is lightest, so that a visual effect in which a color gradually becomes lighter with an increase in a distance is presented from the pre-drawn line to the edge that is in the spreading area and that is far away from the pre-drawn line.

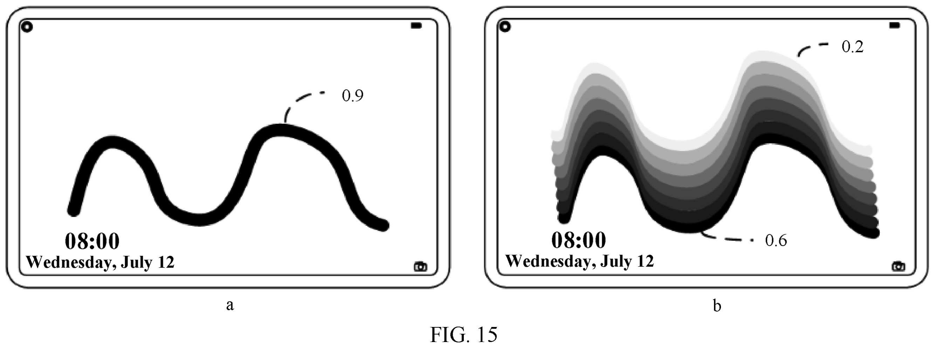

FIG. 15 is a diagram of spreading the pre-drawn line to form the spreading area according to an embodiment of this application. As shown in a in FIG. 15, the opacity of the pre-drawn line is 0.9 before the spreading process does not start. As shown in b in FIG. 15, when the spreading process ends, the opacity of the pre-drawn line is 0.6, opacity of the edge that is in the spreading area and that is far away from the pre-drawn line is 0.2, and opacity of an area between the pre-drawn line and the edge is (0.2, 0.6). Therefore, a visual effect of gradually transitioning from the opacity 0.6 to the opacity 0.2 is presented.

In some embodiments, the preset spreading distance corresponding to the pre-drawn line may be adjusted based on user's actual requirements, to generate the spreading area with a specific spreading distance, so as to achieve a better visual effect.

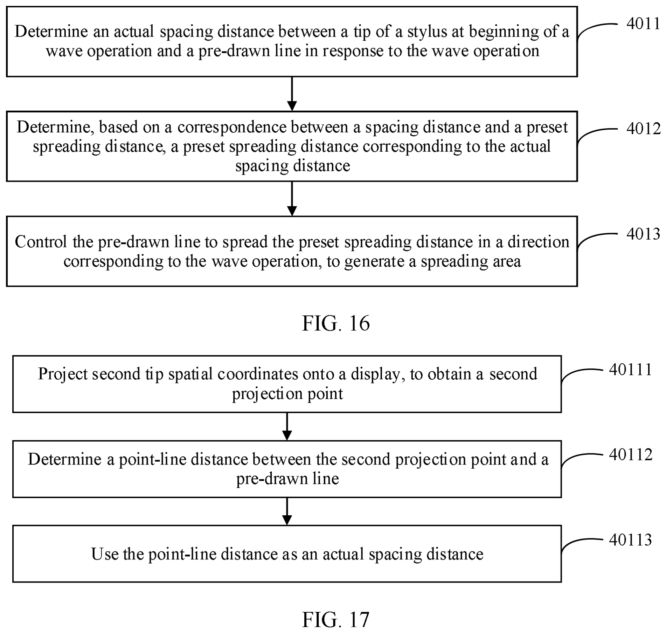

FIG. 16 is a schematic flowchart of a method for controlling spreading of the pre-drawn line based on the distance between the stylus and the pre-drawn line according to an embodiment of this application. Step 401 may be implemented by performing substeps 4011 to 4013.

Step 4011: Determine an actual spacing distance between the tip of the stylus at the beginning of the wave operation and the pre-drawn line in response to the wave operation.

In this embodiment of this application, on a basis that the wave operation is identified, start time of the wave operation may be determined, and then a spatial position of the tip of the stylus corresponding to the start time is determined. The pre-drawn line also has a spatial position in the spatial coordinate system. Therefore, the actual spacing distance between the tip of the stylus and the pre-drawn line is determined based on the spatial position of the tip of the stylus and the spatial position of the pre-drawn line.

In some embodiments, because the tip of the stylus and the pre-drawn line are not located on a same plane, the actual spacing distance between the tip of the stylus and the pre-drawn line can be more conveniently calculated by projecting both onto a common plane.

FIG. 17 is a schematic flowchart of a method for calculating the spacing distance between the tip of the stylus and the pre-drawn line according to an embodiment of this application. Step 4011 may be implemented by performing substeps 40111 to 40113.

Step 40111: Project second tip spatial coordinates onto the display, to obtain a second projection point.

In this embodiment of this application, the second tip spatial coordinates of the tip of the stylus may be projected onto a plane on which the display is located, namely, a plane on which the pre-drawn line is located, to obtain the second projection point corresponding to the tip of the stylus.

Step 40112: Determine a point-line distance between the second projection point and the pre-drawn line.

In this embodiment of this application, a midpoint of the pre-drawn line may be used as a reference for calculating the point-line distance between the second projection point and the pre-drawn line. Certainly, alternatively, another point on the pre-drawn line may be used as a reference for calculating the point-line distance. This is not particularly limited herein.

Step 40113: Use the point-line distance as the actual spacing distance.

In this embodiment of this application, the point-line distance that is between the second projection point of the tip of the stylus and the pre-drawn line and that is calculated on the plane on which the display is located is used as the actual spacing distance between the tip of the stylus and the pre-drawn line. This simplifies a complex calculation process of directly calculating the actual spacing distance in space.

Step 4012: Determine, based on a correspondence between a spacing distance and a preset spreading distance, the preset spreading distance corresponding to the actual spacing distance.

Step 4013: Control the pre-drawn line to spread the preset spreading distance in the direction corresponding to the wave operation, to generate the spreading area.

In this embodiment of this application, the spacing distance between the tip of the stylus at the beginning of the wave operation and the pre-drawn line is correlated with the preset spreading distance of the pre-drawn line by using a start moment of the wave operation as a reference, and the spacing distance is positively correlated with the preset spreading distance. In other words, a smaller spacing distance indicates a smaller preset spreading distance, and a greater spacing distance indicates a greater preset spreading distance. Therefore, in an actual spreading process, the user may adjust a start position of the wave operation, to adjust the actual spacing distance between the tip of the stylus and the pre-drawn line. Then, the corresponding preset spreading distance is determined based on the actual spacing distance, to control the pre-drawn line to spread the preset spreading distance corresponding to the actual spacing distance, so as to obtain a spreading effect satisfactory to the user.

It should be understood that when there are a plurality of pre-drawn lines, the spreading solution in the foregoing embodiment is also applicable. To be specific, only one wave operation needs to be performed, and an object on which the wave operation is performed may be considered as all pre-drawn lines. Because actual spacing distances between different pre-drawn lines and the tip of the stylus are different, different pre-drawn lines spread different preset spreading distances in a same ink wash painting, to achieve a specific visual effect.

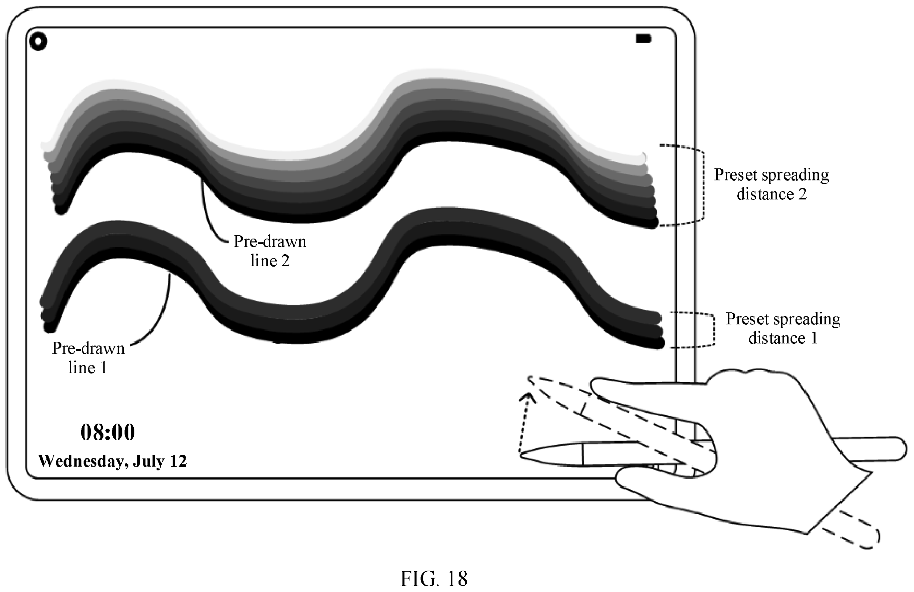

FIG. 18 is a diagram of a spreading effect in a plurality of pre-drawn lines according to an embodiment of this application. As shown in FIG. 18, there are two pre-drawn lines, namely, a pre-drawn line 1 and a pre-drawn line 2. When the user performs the wave operation on the stylus, the tip of the stylus is relatively close to the pre-drawn line 1, and is relatively far away from the pre-drawn line 2. Therefore, a preset spreading distance 1 corresponding to the pre-drawn line 1 is less than a preset spreading distance 2 corresponding to the pre-drawn line 2.

Step 402: Display an ink wash painting including at least the pre-drawn line and the spreading area.

In this embodiment of this application, after the spreading process ends, the ink wash painting including at least the pre-drawn line and the spreading area may be displayed on the display of the electronic device.

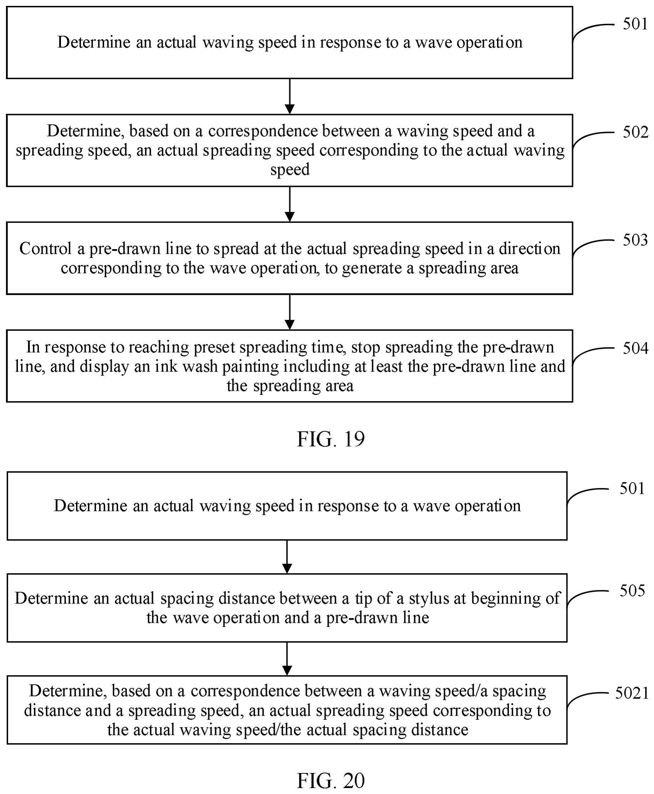

FIG. 19 is a schematic flowchart of another method for generating an ink wash painting with a spreading effect according to an embodiment of this application. Step 102 may be specifically implemented by performing sub-steps 501 and 504.

Step 501: Determine an actual waving speed in response to the wave operation.

In this embodiment of this application, a spatial coordinate system is established by using a preset reference point on the display of the electronic device as a reference, and tip spatial coordinates of the tip of the stylus are determined in the spatial coordinate system. For details about how to establish the spatial coordinate system and how to determine the tip spatial coordinates, refer to the solution recorded in step 3011. Details are not described herein again. For how to determine, based on the known tip spatial coordinates, that the wave operation is performed on the stylus, refer to the solution recorded in step 401. Details are not described herein again.

On a basis that the wave operation is identified, the electronic device can naturally determine start time of the wave operation and end time of the wave operation. Therefore, the electronic device may determine, based on tip spatial coordinates of the tip of the stylus at the beginning of the wave operation and spatial coordinates of the tip of the stylus at ending of the wave operation, a length of a tip motion trajectory corresponding to a single wave operation. In addition, the electronic device may determine, based on start time of the wave operation and end time of the wave operation, time consumed by the single wave operation, and then obtain a ratio of the length of the tip motion trajectory to the time consumed by the single wave operation, to determine an actual waving speed corresponding to the single wave operation.

Step 502: Determine, based on a correspondence between a waving speed and a spreading speed, the actual spreading speed corresponding to the actual waving speed.

In this embodiment of this application, the waving speed may be correlated with the spreading speed, and the waving speed is positively correlated with the spreading speed. To be specific, a smaller waving speed indicates a smaller spreading speed. Conversely, a greater waving speed indicates a greater spreading speed. In this case, the actual spreading speed may be determined based on the actual waving speed.

In some embodiments, in addition to controlling the spreading speed based on the waving speed, the spreading speed may be further controlled with reference to the spacing distance between the tip of the stylus and the pre-drawn line.

FIG. 20 is a schematic flowchart of a spreading speed control method according to an embodiment of this application. Before step 502 is performed, step 505 may be further performed.

Step 505: Determine the actual spacing distance between the tip of the stylus at the beginning of the wave operation and the pre-drawn line.

Step 502 may be specifically implemented by performing sub-step 5021.

Step 5021: Determine, based on the correspondence between a waving speed and a spreading speed/a correspondence between a spacing distance and a spreading speed, the actual spreading speed corresponding to the actual waving speed/the actual spacing distance.

In this embodiment of this application, the spreading speed of the pre-drawn line is not only positively correlated with the waving speed, but also positively correlated with the spacing distance between the tip of the stylus and the pre-drawn line. To be specific, a greater spacing distance and waving speed indicate a greater corresponding spreading speed, and a smaller spacing distance and waving speed indicate a smaller corresponding spreading speed.

It should be understood that for specific how to determine the actual spacing distance in step 505, refer to step 40111 to step 40113 above. Details are not described herein again.

Step 503: Control the pre-drawn line to spread at the actual spreading speed in the direction corresponding to the wave operation, to generate the spreading area.

In this embodiment of this application, the electronic device may control the pre-drawn line to spread in the waving direction based on the determined actual spreading speed, to generate the spreading area. In other words, the user may adjust the spacing distance between the tip of the stylus and the pre-drawn line and the waving speed based on user's actual requirements, to generate a spreading area with a specific spreading distance, so as to achieve a better visual effect.

It should be understood that, in a spreading process of a line drawn by using the ink brush, because an amount of ink of the drawn line is fixed, in the spreading process, as a spreading distance increases, opacity of the line at a spreading start point is decreased due to a decrease in the amount of ink. Therefore, when a spreading effect is achieved by using the wave operation on the stylus, in a process in which the pre-drawn line spreads at the preset spreading speed, the electronic device may also simulate that the opacity of the pre-drawn line is negatively correlated with the spreading distance, and simulate that the opacity in the spreading area is negatively correlated with a distance between the pre-drawn line and the spreading area. In other words, a color of the pre-drawn line is darkest, a color in the spreading area gradually becomes lighter, and a color at an edge that is in the spreading area and that is far away from the pre-drawn line is lightest, so that a visual effect in which a color gradually becomes lighter with an increase in a distance is presented from the pre-drawn line to the edge that is in the spreading area and that is far away from the pre-drawn line.

Step 504: In response to reaching preset spread time, stop spreading the pre-drawn line, and displaying the ink wash painting including at least the pre-drawn line and the spreading area.

In this embodiment of this application, when a single wave operation is performed on the stylus, spread time of the pre-drawn line is fixed, meaning that the spread time is the preset spread time. When the preset spread time is reached, spreading of the pre-drawn line ends. When the actual spreading speed is smaller, a final actual spreading distance is also smaller. On the contrary, when the actual spreading speed is greater, a final actual spreading distance is also greater. The electronic device may display the ink wash painting including at least the pre-drawn line and the formed spreading area.

In the foregoing embodiment, adjusting the waving speed of the single wave operation can directly affect the spreading speed, and further indirectly affect a size of the spreading area formed by the single wave operation. In this case, the user may adjust the waving speed of the stylus based on user's actual requirements, to generate a spreading area with a specific spreading distance when a quantity of wave operations is small, so as to achieve a better visual effect.

In the foregoing embodiment, the wave operation is used to trigger spreading of the pre-drawn line. In another embodiment, the wave operation may alternatively be used to trigger stopping of spreading the pre-drawn line.

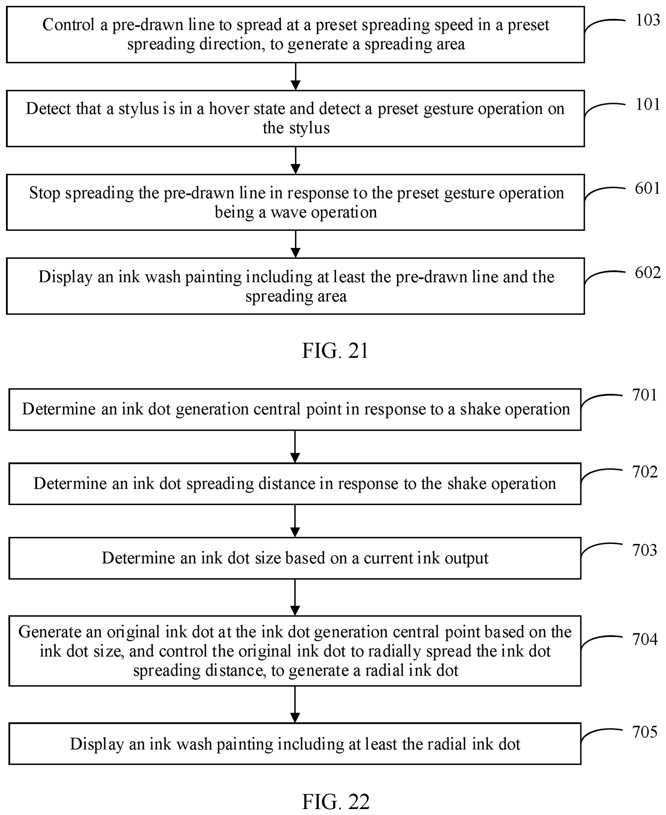

FIG. 21 is a schematic flowchart of another method for generating an ink wash painting with a spreading effect according to an embodiment of this application. Before step 101, step 103 may be further performed.

Step 103: Control the pre-drawn line to spread at the preset spreading speed in the preset spreading direction, to generate the spreading area.

In this embodiment of this application, before drawing a line, the user may select a type of ink. The type of ink includes ink of an automatic spreading type and ink of a passive spreading type. When the user selects ink of the automatic spreading type to draw a line, the generated pre-drawn line has an automatic spreading capability. Once the pre-drawn line is drawn, the pre-drawn line spreads at the preset spreading speed in the preset spreading direction, to generate the spreading area. It should be understood that the preset spreading direction herein may be a specific direction, or the pre-drawn line may spread simultaneously in all directions. This is not particularly limited herein.

It should be understood that, in a spreading process of a line drawn by using the ink brush, because an amount of ink of the drawn line is fixed, in the spreading process, as a spreading distance increases, opacity of the line at a spreading start point is decreased due to a decrease in the amount of ink. Therefore, when a spreading effect is achieved by using the wave operation on the stylus, in a process in which the pre-drawn line spreads in the preset spreading direction, the electronic device may also simulate that the opacity of the pre-drawn line is negatively correlated with the spreading distance, and simulate that the opacity in the spreading area is negatively correlated with a distance between the pre-drawn line and the spreading area. In other words, a color of the pre-drawn line is darkest, a color in the spreading area gradually becomes lighter, and a color at an edge that is in the spreading area and that is far away from the pre-drawn line is lightest, so that a visual effect in which a color gradually becomes lighter with an increase in a distance is presented from the pre-drawn line to the edge that is in the spreading area and that is far away from the pre-drawn line.

Step 102 may be specifically implemented by performing sub-steps 601 and 602.

Step 601: Stop spreading the pre-drawn line in response to a preset gesture operation being the wave operation.

Step 602: Display an ink wash painting including at least the pre-drawn line and the spreading area.

In this embodiment of this application, when the spreading area formed by the pre-drawn line through spreading achieves a visual effect required by the user, the user may perform the wave operation on the stylus. When detecting the wave operation performed on the stylus, the electronic device stops spreading the pre-drawn line, and displays an ink wash painting including at least an originally drawn line and a subsequently formed spreading area. It should be understood that for how the electronic device identifies the wave operation performed on the stylus, refer to the content recorded in step 401. Details are not described herein again.

It should be understood that the spreading area herein may be a decoration of a pre-drawn ink wash painting. After the spreading area is superimposed, a complete ink wash painting is formed. Alternatively, the spreading area herein may be a basis for subsequently drawing another element. The user may further perform processing based on the spreading area to form a complete ink wash painting.

Visual effect 4: Generate an ink wash painting with an ink dripping effect.

FIG. 22 is a schematic flowchart of a method for generating the ink wash painting with the ink dripping effect according to an embodiment of this application. Step 102 may be specifically implemented by performing sub-steps 701 to 705.

Step 701: Determine an ink dot generation central point in response to a shake operation.

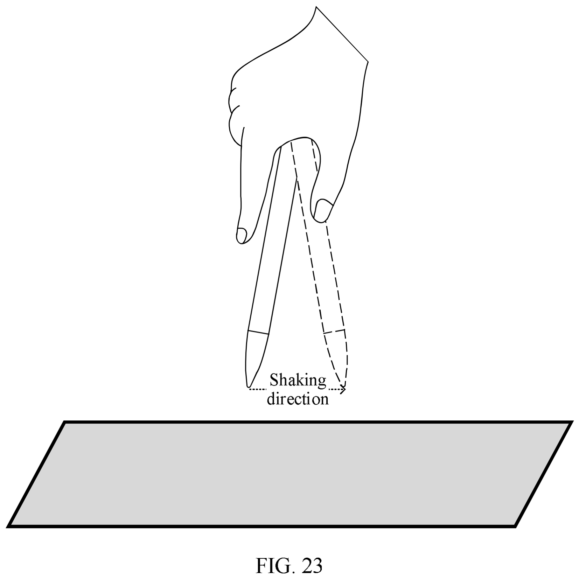

In this embodiment of this application, a spatial coordinate system is established by using a preset reference point on the display of the electronic device as a reference, and tip spatial coordinates of the tip of the stylus are determined in the spatial coordinate system. For details about how to establish the spatial coordinate system and how to determine the tip spatial coordinates, refer to the solution recorded in step 3011. Details are not described herein again. FIG. 23 is a diagram of performing the shake operation on the stylus according to an embodiment of this application. As shown in FIG. 23, a gyroscope is configured in the stylus. If the electronic device receives gyroscope data of the stylus indicating that the stylus is in a swing state, and the electronic device detects that tip spatial coordinates of the stylus continuously change, and when the tip spatial coordinates continuously change, a spatial distance between tip spatial coordinates at beginning and tip spatial coordinates at ending is within a specified range, the electronic device may determine that the user performs the shake operation on the stylus.

After it is determined that the user performs the shake operation on the stylus, a specific feature of the shake operation may be correlated with an ink dot generation center.

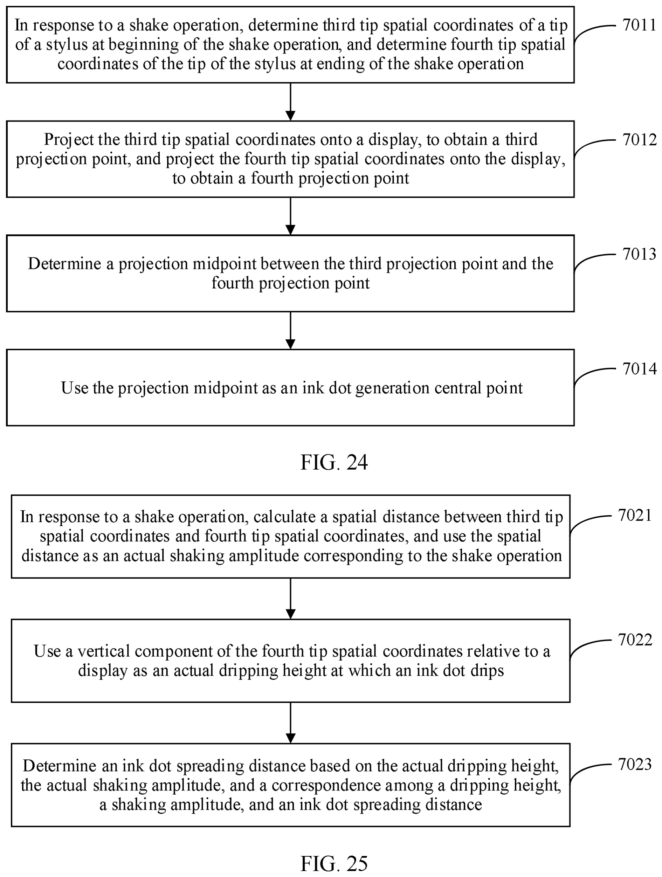

FIG. 24 is a schematic flowchart of a method for determining the ink dot generation center according to an embodiment of this application. Step 701 may be specifically implemented by performing sub-steps 7011 to 7014.

Step 7011: In response to the shake operation, determine third tip spatial coordinates of the tip of the stylus at the beginning of the shake operation, and determine fourth tip spatial coordinates of the tip of the stylus at ending of the shake operation.

In this embodiment of this application, on a basis that the shake operation is identified, start time and end time of the shake operation may be determined, and then a spatial position of the tip of the stylus corresponding to the start time, namely, the third tip spatial coordinates, and a spatial position of the tip of the stylus corresponding to the end time, namely, the fourth tip spatial coordinates, may be determined.

Step 7012: Project the third tip spatial coordinates onto the display, to obtain a third projection point; and project the fourth tip spatial coordinates onto the display, to obtain a fourth projection point.

In this embodiment of this application, the third tip spatial coordinates and the fourth tip spatial coordinates are separately projected onto a plane on which the display of the electronic device is located, to determine an initial position of the tip of the stylus on the plane on which the display is located at a start moment of the shake operation, namely, the third projection point, and an end position of the tip of the stylus on the plane on which the display is located at an end moment of the shake operation, namely, the fourth projection point.

Step 7013: Determine a projection midpoint between the third projection point and the fourth projection point.

In this embodiment of this application, the third projection point and the fourth projection point are located on a same plane. Therefore, a midpoint of a line connecting the third projection point and the fourth projection point is the projection midpoint.

For example, if coordinates of the third projection point are (x1, y1) and coordinates of the fourth projection point are (x2, y2), coordinates of the projection midpoint are ((x1+x2)/2, (y1+y2)/2).

Step 7014: Use the projection midpoint as the ink dot generation central point.

In this embodiment of this application, the projection midpoint is used as the ink dot generation central point, so that the user can conveniently adjust an ink dot generation position by changing a start position and an end position of the shake operation.

Step 702: Determine an ink dot spreading distance in response to the shake operation.

In this embodiment of this application, after it is determined that the user performs the shake operation on the stylus, a specific feature of the shake operation may be correlated with the ink dot spreading distance, so that the user can adjust the ink dot spreading distance by changing the feature of the shake operation, to achieve a visual effect required by the user.

FIG. 25 is a schematic flowchart of a method for determining the ink dot spreading distance according to an embodiment of this application. Step 702 may be specifically implemented by performing sub-steps 7021 to 7023.

Step 7021: In response to the shake operation, calculate a spatial distance between the third tip spatial coordinates and the fourth tip spatial coordinates, and use the spatial distance as an actual shaking amplitude corresponding to the shake operation.

In this embodiment of this application, the third tip spatial coordinates are spatial coordinates of the tip of the stylus at the beginning of the shake operation, and the fourth spatial coordinates are spatial coordinates of the tip of the stylus at ending of the shake operation. Therefore, on a basis that the third tip spatial coordinates and the fourth spatial coordinates are known, a spatial distance corresponding to a single shake operation from start time to end time may be determined, and the spatial distance may be considered as an actual shaking amplitude corresponding to the single shake operation.

Step 7022: Use a vertical component of the fourth tip spatial coordinates relative to the display as an actual dripping height at which an ink dot drips.

When the ink dripping effect is generated by using the ink brush, an ink dot may be considered as being thrown away from the tip of the ink brush at a moment at which a shake operation on the ink brush stops. Therefore, in this embodiment of this application, when the ink dot is generated by using the stylus, the end time of the shake operation on the stylus may also be used as time at which the ink dot is thrown away. In this case, the vertical component of the fourth tip spatial coordinates, that corresponds to the tip of the stylus, relative to the display may be used as the actual dripping height at which the ink dot drips.

Step 7023: Determine the ink dot spreading distance based on the actual dripping height, the actual shaking amplitude, and a correspondence among a dripping height, a shaking amplitude, and an ink dot spreading distance.

When the ink dripping effect is generated by using the ink brush, a greater dripping height of the ink dot indicates a larger movement speed of the ink dot before the ink dot is in contact with a plane on which drawing paper is located. After the ink dot is in contact with the plane on which the drawing paper is located, the large movement speed needs to decrease to 0 in an extremely short period of time. Therefore, the ink dot significantly spreads, that is, a spreading distance is long, due to large force from the drawing paper. On the contrary, a smaller dripping height of the ink dot indicates a smaller movement speed of the ink dot before the ink dot is in contact with the plane on which the drawing paper is located. After the ink dot is in contact with the plane on which the drawing paper is located, the small movement speed needs to decrease to 0 in an extremely short period of time. Therefore, the ink dot insignificantly spreads, that is, a spreading distance is short, due to small force from the drawing paper. Similarly, a larger shaking amplitude of the shake operation indicates a larger initial speed of the thrown ink dot. In this case, when the dripping height is fixed, the movement speed of the ink dot can still increase to a relatively large value before the ink dot is in contact with the plane on which the drawing paper is located. After the ink dot is in contact with the plane on which the drawing paper is located, the large movement speed needs to decrease to 0 in an extremely short period of time. Therefore, the ink dot significantly spreads, that is, a spreading distance is long, due to large force from the drawing paper. On the contrary, a smaller shaking amplitude of the shake operation indicates a smaller initial speed of the thrown ink dot. In this case, when the dripping height is fixed, the movement speed of the ink dot still increases to a limited extent before the ink dot is in contact with the plane on which the drawing paper is located. After the ink dot is in contact with the plane on which the drawing paper is located, the small movement speed needs to decrease to 0 in an extremely short period of time. Therefore, the ink dot needs to be subject to only relatively small force from the drawing paper, and insignificantly spreads, that is, a spreading distance is short.

Therefore, in this embodiment of this application, when the ink dripping effect is generated by using the stylus, the correspondence among a dripping height of an ink spot, a shaking amplitude of a shake operation, and an ink dot spreading distance may also be simulated and established, and the correspondence is positive correlation. Therefore, the actual shaking amplitude, the actual dripping height, and the corresponding actual spreading distance are determined based on the foregoing correspondence.

Step 703: Determine an ink dot size based on a current ink output.

When the ink dripping effect is generated by using the ink brush, an amount of ink dipped by the ink brush determines an original size of an ink dot that can be formed after the ink dot falls. Therefore, in this embodiment of this application, a correspondence between an ink output and an ink dot size may also be established in advance, and then an actual ink dot size is determined based on the current ink output of the stylus and the foregoing correspondence.

Step 704: Generate an original ink dot at the ink dot generation central point based on the ink dot size, and control the original ink dot to radially spread the ink dot spreading distance, to generate a radial ink dot.

In this embodiment of this application, after the ink dot generation center and the ink dot size are determined, the original ink dot, namely, the ink dot that does not spread, may be generated at the ink dot generation center based on the ink dot size. On this basis, in combination of the ink dot spreading distance, the original ink dot is controlled to radially spread based on the ink dot spreading distance, to obtain the radial ink dot.

It should be understood that the radial ink dot may include two parts. A first part is an irregular block area in the middle, and a second part is a scatter point area around the irregular block area. A radial spread radius of the first part, namely, the irregular area, is k*w, where k is a random number, 0<k<1, and w indicates the actual shaking amplitude. A radial spread radius of the second part, namely, the scatter point area, is j*h, where j is a random number, j>1, and h indicates the actual ink dripping height.

Step 705: Display the ink wash painting including at least the radial ink dot.

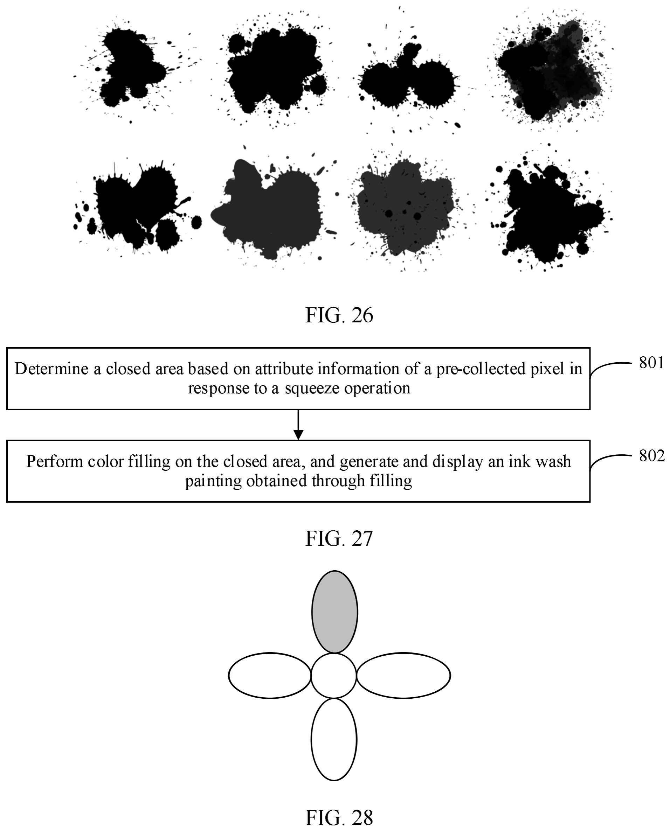

FIG. 26 is a diagram of radial ink dots according to an embodiment of this application. As shown in FIG. 26, after the spreading process is completed, the ink wash painting including at least the radial ink dot may be displayed on the display of the electronic device. It should be understood that the radial ink dot herein may be a decoration of a pre-drawn ink wash painting. After the radial ink dot is superimposed, a complete ink wash painting is formed. Alternatively, the radial ink dot herein may be a basis for subsequently drawing another element. The user may further perform processing based on the radial ink dot to form a complete ink wash painting.

Visual effect 5: Generate a filling effect.

FIG. 27 is a schematic flowchart of a method for generating the ink wash painting with the filling effect according to an embodiment of this application. Step 102 may be specifically implemented by performing sub-steps 801 and 802.

Step 801: Determine a closed area based on attribute information of a pre-collected pixel in response to a squeeze operation.

When the visual effects 1 to 4 are formed, it may be considered that the stylus is in an ink brush function. In this embodiment of this application, when color filling needs to be performed, the stylus needs to be first switched from the ink wash painting function to an eyedropper function, and then the stylus performing the eyedropper function is used to collect attribute information of any pixel in an area that is on the display and that the user wants to fill with a color. When detecting the squeeze operation, the stylus sends the attribute information of the pre-collected pixel to the electronic device. The attribute information herein includes a hue, saturation, and brightness of the pixel. After learning of the attribute information of the pre-collected pixel, the electronic device may search for pixels that in adjacent pixels of the pre-collected pixel and whose attribute information has a difference with that of the pre-collected pixel within a specified range, and determine a closed area based on the pixels whose attribute information has the difference within the specified range and the pre-collected pixel. Herein, a mechanism for identifying, by the electronic device when the stylus is performing the eyedropper function, the squeeze operation performed on the stylus is the same as a mechanism for determining, when the stylus is in the ink brush function, the squeeze operation performed on the stylus. Details are not described herein again.

It should be understood that both triggering color filling and triggering adjustment of the reference ink output are based on the squeeze operation performed on the stylus. However, when the reference ink output is adjusted, the stylus is performing the ink wash painting brush function. When color filling is performed, the stylus is performing the eyedropper function. Therefore, even if both are squeeze operations, a function disorder does not occur.

Step 802: Perform color filling on the closed area, and generate and display the ink wash painting obtained through filling.

In this embodiment of this application, after the closed area is determined, color filling may be performed on the closed area. FIG. 28 is a diagram of color filling according to an embodiment of this application. As shown in FIG. 28, the ink wash painting obtained through color filling is displayed on the display of the electronic device. A filled color may be any color selected by the user. This is not specifically limited herein.

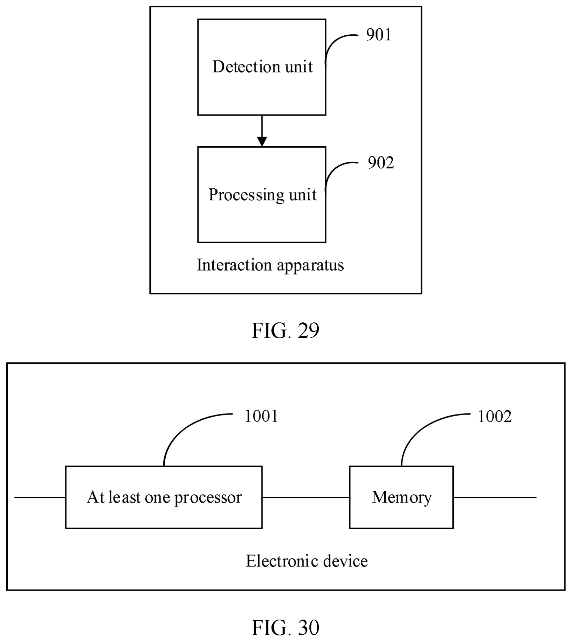

Refer to FIG. 29. Based on the same inventive concept, an embodiment of this application provides an interaction apparatus. The interaction apparatus is disposed in an electronic device, and the electronic device supports a stylus as a corresponding input device. The interaction apparatus includes:
a detection unit 901, configured to: detect that the stylus is in a hover state and detect a preset gesture operation on the stylus; and
a processing unit 902, configured to: generate and display an ink wash painting in response to the preset gesture operation.

Optionally, the preset gesture operation is a squeeze operation performed on a body of the stylus. The processing unit 902 is specifically configured to:
adjust a reference ink output of the stylus in response to the squeeze operation;
determine, based on a correspondence between an ink output and opacity of a line and a correspondence between an ink output and a width of a line, reference opacity and a reference width corresponding to the reference ink output; and
generate and display a preview ink wash painting, where opacity of a line of the preview ink wash painting is the reference opacity, and a width of the line of the preview ink wash painting is the reference width.

Optionally, the interaction apparatus further includes:
an obtaining unit, configured to obtain an actual pressure value at a contact point of the stylus in response to a drawing operation of the stylus; and
a determining unit, configured to determine an actual ink output based on the actual pressure value and the reference ink output.

The processing unit 902 is further configured to determine, based on the actual ink output, to generate and display a line combination with corresponding opacity and a corresponding width.

Optionally, the preset gesture operation is a tap operation performed on the body of the stylus. The processing unit 902 includes:
a scatter point generation area determining unit, configured to: in response to the tap operation, determine, on a display of the electronic device, a scatter point generation area corresponding to the stylus;
a scatter point generation unit, configured to randomly generate scatter points in the scatter point generation area based on a first preset quantity; and
a display unit, configured to display the ink wash painting including at least the scatter points.

Optionally, a spatial coordinate system is established by using a preset reference point on a display of the electronic device as a reference. The scatter point generation area determining unit is specifically configured to:
determine first tip spatial coordinates of a tip of the stylus, and determine a tilt angle between the stylus and the preset reference point;
project the first tip spatial coordinates onto the display, to obtain a first projection point;
use the first projection point as a central point of the scatter point generation area;
determine a radius value of the scatter point generation area based on a vertical component of the first tip spatial coordinates relative to the display and a tilt angle; and
determine the scatter point generation area based on the central point and the radius value.

Optionally, the scatter point generation unit is specifically configured to:
divide the scatter point generation area into a second preset quantity of scatter point generation subareas; and
randomly generate and display a plurality of scatter points in each scatter point generation subarea based on a distance between each scatter point generation subarea and the central point, where a sum of quantities of scatter points in all the scatter point generation subareas is equal to the first preset quantity, a size of a scatter point in a same scatter point generation subarea is positively correlated with a distance between the scatter point generation subarea and the central point, and density and opacity of the scatter point in the same scatter point generation subarea are both negatively correlated with the distance between the scatter point generation subarea and the central point.

Optionally, the preset gesture operation is a wave operation. The processing unit 902 includes:
a spreading unit, configured to: control, in response to the wave operation, a pre-drawn line to spread a preset spreading distance in a direction corresponding to the wave operation, to generate a spreading area, where opacity of the pre-drawn line in a spreading process is negatively correlated with the preset spreading distance, and opacity of the spreading area is negatively correlated with a distance between the spreading area and the pre-drawn line; and
a display unit, configured to display the ink wash painting including at least the pre-drawn line and the spreading area.

Optionally, the spreading unit includes:
a spacing distance determining unit, configured to: in response to the wave operation, determine an actual spacing distance between a tip of the stylus at the beginning of the wave operation and the pre-drawn line;
a spreading distance determining unit, configured to determine, based on a correspondence between a spacing distance and a preset spreading distance, the preset spreading distance corresponding to the actual spacing distance, where the spacing distance is positively correlated with the preset spreading distance; and
a line spreading unit, configured to control the pre-drawn line to spread the preset spreading distance in the direction corresponding to the wave operation, to generate the spreading area.

Optionally, the preset gesture operation is a wave operation. The processing unit 902 includes:
a waving speed determining unit, configured to determine an actual waving speed in response to the wave operation;
a spreading speed determining unit, configured to determine, based on a correspondence between a waving speed and a spreading speed, an actual spreading speed corresponding to the actual waving speed, where the waving speed is positively correlated with the spreading speed;
a spreading unit, configured to control a pre-drawn line to spread at the actual spreading speed in a direction corresponding to the wave operation, to generate a spreading area, where opacity of the pre-drawn line in a spreading process is negatively correlated with a spreading distance, and opacity of the spreading area is negatively correlated with a distance between the spreading area and the pre-drawn line; and
a display unit, configured to: in response to reaching preset spreading time, stop spreading the pre-drawn line, and generate and display the ink wash painting including at least the pre-drawn line and the spreading area.

Optionally, the interaction apparatus further includes:
a spacing distance determining unit, configured to determine an actual spacing distance between a tip of the stylus at the beginning of the wave operation and the pre-drawn line.

The spreading speed determining unit is specifically configured to:
determine, based on the correspondence between a waving speed and a spreading speed/a correspondence between a spacing distance and a spreading speed, the actual spreading speed corresponding to the actual waving speed/the actual spacing distance, where the spacing distance is positively correlated with the spreading speed.

Optionally, a spatial coordinate system is established by using a preset reference point on a display of the electronic device as a reference. The spacing distance determining unit is specifically configured to:
project second tip spatial coordinates onto the display, to obtain a second projection point;
determine a point-line distance between the second projection point and the pre-drawn line; and
use the point-line distance as the actual spacing distance.

Optionally, the interaction apparatus further includes:
an automatic spreading unit, configured to control a pre-drawn line to spread in a preset spreading direction at a preset spreading speed, to generate a spreading area, where opacity of the pre-drawn line in a spreading process is negatively correlated with a spreading distance, and opacity of the spreading area is negatively correlated with a distance between the spreading area and the pre-drawn line.

The preset gesture operation is a wave operation. The processing unit 902 is specifically configured to:
stop spreading the pre-drawn line in response to the wave operation; and
display the ink wash painting including at least the pre-drawn line and the spreading area.

Optionally, the preset gesture operation is a shake operation. The processing unit 902 includes:
an ink dot generation center determining unit, configured to determine an ink dot generation central point in response to the shake operation;
an ink dot spreading distance determining unit, configured to determine an ink dot spreading distance in response to the shake operation;
an ink dot size determining unit, configured to determine an ink dot size based on a current ink output; and
an ink dot generation and spreading unit, configured to: generate an original ink dot at the ink dot generation central point based on the ink dot size, and control the original ink dot to radially spread the ink dot spreading distance, to generate a radial ink dot.

The display unit is configured to display the ink wash painting including at least the radial ink dot.

Optionally, a spatial coordinate system is established by using a preset reference point on a display of the electronic device as a reference. The ink dot generation center determining unit is specifically configured to:
in response to the shake operation, determine third tip spatial coordinates of the tip of the stylus at the beginning of the shake operation, and determine fourth tip spatial coordinates of the tip of the stylus at ending of the shake operation;
project the third tip spatial coordinates onto the display, to obtain a third projection point, and project the fourth tip spatial coordinates onto the display, to obtain a fourth projection point;
determine a projection midpoint between the third projection point and the fourth projection point; and
use the projection midpoint as the ink dot generation central point.

Optionally, the ink dot spreading distance determining unit is specifically configured to:
in response to the shake operation, calculate a spatial distance between the third tip spatial coordinates and the fourth tip spatial coordinates, and use the spatial distance as an actual shaking amplitude corresponding to the shake operation;
use a vertical component of the fourth tip spatial coordinates relative to the display as an actual dripping height at which an ink dot drips; and
determine, based on a correspondence among a dripping height, a shaking amplitude, and an ink dot spreading distance, the ink dot spreading distance corresponding to the actual dripping height and the actual shaking amplitude.

Optionally, the stylus is performing an eyedropper function, and the preset gesture operation is a squeeze operation. The processing unit 902 is specifically configured to:
determine a closed area based on attribute information of a pre-collected pixel in response to the squeeze operation; and
perform color filling on the closed area, and generate and display the ink wash painting obtained through filling.

Refer to FIG. 30. Based on the same invention concept, an embodiment of this application provides an electronic device. The electronic device includes at least one processor 1001. The processor 1001 is configured to execute a computer program stored in a memory, to implement steps of the interaction methods shown in FIG. 1 and FIG. 2, FIG. 5 and FIG. 6, FIG. 8, FIG. 11, FIG. 13, FIG. 16 and FIG. 17, FIG. 19 to FIG. 22, FIG. 24 and FIG. 25, and FIG. 27 according to embodiments of this application.

Optionally, the processor 1001 may be specifically a central processing unit, a specific ASIC, or one or more integrated circuits configured to control program execution.

Optionally, the electronic device may further include a memory 1002 coupled to the at least one processor 1001. The memory 1002 may include a ROM, a RAM, and a magnetic disk memory. The memory 1002 is configured to store data required for running of the processor 1001, that is, store instructions that can be executed by the at least one processor 1001. The at least one processor 1001 executes the instructions stored in the memory 1002, to perform the methods shown in FIG. 1 and FIG. 2, FIG. 5 and FIG. 6, FIG. 8, FIG. 11, FIG. 13, FIG. 16 and FIG. 17, FIG. 19 to FIG. 22, FIG. 24 and FIG. 25, and FIG. 27. There are one or more memories 1002.

Physical devices corresponding to the detection unit 901 and the processing unit 902 may be the foregoing processor 1001. The electronic device may be configured to perform the methods according to the embodiments shown in FIG. 1 and FIG. 2, FIG. 5 and FIG. 6, FIG. 8, FIG. 11, FIG. 13, FIG. 16 and FIG. 17, FIG. 19 to FIG. 22, FIG. 24 and FIG. 25, and FIG. 27. Therefore, for functions that can be implemented by each functional module in the electronic device, refer to corresponding descriptions in the embodiments shown in FIG. 1 and FIG. 2, FIG. 5 and FIG. 6, FIG. 8, FIG. 11, FIG. 13, FIG. 16 and FIG. 17, FIG. 19 to FIG. 22, FIG. 24 and FIG. 25, and FIG. 27. Details are not described again.

An embodiment of this application further provides a computer storage medium. The computer storage medium stores computer instructions. When the computer instructions are run on a computer, the computer is enabled to perform the methods shown in FIG. 1 and FIG. 2, FIG. 5 and FIG. 6, FIG. 8, FIG. 11, FIG. 13, FIG. 16 and FIG. 17, FIG. 19 to FIG. 22, FIG. 24 and FIG. 25, and FIG. 27.

The foregoing descriptions are merely example embodiments of this specification, but are not intended to limit this specification. Any modification, equivalent replacement, or improvement made within the spirit and principle of this specification should fall within the protection scope of this specification.

## Claims

1. An interaction method, applied to an electronic device, wherein the electronic device supports a stylus as a corresponding input device, and the method comprises:
detecting that the stylus is in a hover state and detecting a preset gesture operation on the stylus; and
generating and displaying an ink wash painting in response to the preset gesture operation.

2. The method according to claim 1, wherein the preset gesture operation is a squeeze operation on a body of the stylus, and generating and displaying the ink wash painting in response to the preset gesture operation comprises:
adjusting a reference ink output of the stylus in response to the squeeze operation;
determining, based on a correspondence between a ink output and opacity of a line and a correspondence between an ink output and a width of a line, reference opacity and a reference width corresponding to the reference ink output; and
generating and displaying a preview ink wash painting, wherein opacity of a line of the preview ink wash painting is the reference opacity, and a width of the line of the preview ink wash painting is the reference width.

3. The method according to claim 2, wherein the method further comprises:
obtaining an actual pressure value at a contact point of the stylus in response to a drawing operation of the stylus;
determining an actual ink output based on the actual pressure value and the reference ink output; and
determining, based on the actual ink output, to generate and display a line combination with corresponding opacity and a corresponding width.

4. The method according to claim 1, wherein the preset gesture operation is a tap operation on a body of the stylus, and generating and displaying the ink wash painting in response to the preset gesture operation comprises:
in response to the tap operation, determining, on a display of the electronic device, a scatter point generation area corresponding to the stylus;
randomly generating scatter points in the scatter point generation area based on a first preset quantity; and
displaying the ink wash painting comprising at least the scatter points.

5. The method according to claim 4, wherein a spatial coordinate system is established by using a preset reference point on the display of the electronic device as a reference, and determining, on the display of the electronic device, the scatter point generation area corresponding to the stylus comprises:
determining first tip spatial coordinates of a tip of the stylus, and determining a tilt angle between the stylus and the preset reference point;
projecting the first tip spatial coordinates onto the display, to obtain a first projection point, and using the first projection point as a central point of the scatter point generation area;
determining a radius value of the scatter point generation area based on a vertical component of the first tip spatial coordinates relative to the display and the tilt angle; and
determining the scatter point generation area based on the central point and the radius value.

6. The method according to claim 5, wherein randomly generating the scatter points in the scatter point generation area based on the first preset quantity comprises:
dividing the scatter point generation area into a second preset quantity of scatter point generation subareas; and
randomly generating and displaying a plurality of scatter points in each scatter point generation subarea based on a distance between each scatter point generation subarea and the central point, wherein a sum of quantities of scatter points in all the scatter point generation subareas is equal to the first preset quantity, a size of a scatter point in a same scatter point generation subarea is positively correlated with a distance between the scatter point generation subarea and the central point, and density and opacity of the scatter point in the same scatter point generation subarea are both negatively correlated with the distance between the scatter point generation subarea and the central point.

7. The method according to claim 1, wherein the preset gesture operation is a wave operation, and generating and displaying the ink wash painting in response to the preset gesture operation comprises:
controlling, in response to the wave operation, a pre-drawn line to spread a preset spreading distance in a direction corresponding to the wave operation, to generate a spreading area, wherein opacity of the pre-drawn line in a spreading process is negatively correlated with the preset spreading distance, and opacity of the spreading area is negatively correlated with a distance between the spreading area and the pre-drawn line; and
displaying the ink wash painting comprising at least the pre-drawn line and the spreading area.

8. The method according to claim 7, wherein controlling, in response to the wave operation, the pre-drawn line to spread the preset spreading distance in the direction corresponding to the wave operation, to generate the spreading area comprises:
determining an actual spacing distance between a tip of the stylus at the beginning of the wave operation and the pre-drawn line in response to the wave operation;
determining, based on a correspondence between a spacing distance and a preset spreading distance, the preset spreading distance corresponding to the actual spacing distance, wherein the spacing distance is positively correlated with the preset spreading distance; and
controlling the pre-drawn line to spread the preset spreading distance in the direction corresponding to the wave operation, to generate the spreading area.

9. The method according to claim 1, wherein the preset gesture operation is a wave operation, and generating and displaying the ink wash painting in response to the preset gesture operation comprises:
determining an actual waving speed in response to the wave operation;
determining, based on a correspondence between a waving speed and a spreading speed, an actual spreading speed corresponding to the actual waving speed, wherein the waving speed is positively correlated with the spreading speed;
controlling a pre-drawn line to spread at the actual spreading speed in a direction corresponding to the wave operation, to generate a spreading area, wherein opacity of the pre-drawn line in a spreading process is negatively correlated with a spreading distance, and opacity of the spreading area is negatively correlated with a distance between the spreading area and the pre-drawn line; and
in response to reaching preset spreading time, stopping spreading the pre-drawn line, and generating and displaying the ink wash painting comprising at least the pre-drawn line and the spreading area.

10. The method according to claim 9, wherein before determining, based on the correspondence between a waving speed and a spreading speed, the actual spreading speed corresponding to the actual waving speed, the method further comprises:
determining an actual spacing distance between a tip of the stylus at the beginning of the wave operation and the pre-drawn line; and
determining, based on the correspondence between a waving speed and a spreading speed, the actual spreading speed corresponding to the actual waving speed comprises:
determining, based on the correspondence between a waving speed and a spreading speed/a correspondence between a spacing distance and a spreading speed, the actual spreading speed corresponding to the actual waving speed/the actual spacing distance, wherein the spacing distance is positively correlated with the spreading speed.

11. The method according to claim 8 or 10, wherein a spatial coordinate system is established by using a preset reference point on a display of the electronic device as a reference, the tip of the stylus at the beginning of the wave operation has second tip spatial coordinates, and determining the actual spacing distance between the tip of the stylus at the beginning of the wave operation and the pre-drawn line in response to the wave operation comprises:
projecting the second tip spatial coordinates onto the display, to obtain a second projection point;
determining a point-line distance between the second projection point and the pre-drawn line;
and
using the point-line distance as the actual spacing distance.

12. The method according to claim 1, wherein before detecting that the stylus is in the hover state and detecting the preset gesture operation on the stylus, the method further comprises:
controlling a pre-drawn line to spread in a preset spreading direction at a preset spreading speed, to generate a spreading area, wherein opacity of the pre-drawn line in a spreading process is negatively correlated with a spreading distance, and opacity of the spreading area is negatively correlated with a distance between the spreading area and the pre-drawn line; and
the preset gesture operation is a wave operation, and generating and displaying the ink wash painting in response to the preset gesture operation comprises:
stopping spreading the pre-drawn line in response to the wave operation; and
displaying the ink wash painting comprising at least the pre-drawn line and the spreading area.

13. The method according to claim 1, wherein the preset gesture operation is a shake operation, and generating and displaying the ink wash painting in response to the preset gesture operation comprises:
determining an ink dot generation central point and determining an ink dot spreading distance in response to the shake operation;
determining an ink dot size based on a current ink output;
generating an original ink dot at the ink dot generation central point based on the ink dot size, and controlling the original ink dot to radially spread the ink dot spreading distance, to generate a radial ink dot; and
displaying the ink wash painting comprising at least the radial ink dot.

14. The method according to claim 13, wherein a spatial coordinate system is established by using a preset reference point on a display of the electronic device as a reference, and determining the ink dot generation central point in response to the shake operation comprises:
in response to the shake operation, determining third tip spatial coordinates of a tip of the stylus at the beginning of the shake operation, and determining fourth tip spatial coordinates of the tip of the stylus at ending of the shake operation;
projecting the third tip spatial coordinates onto the display, to obtain a third projection point, and projecting the fourth tip spatial coordinates onto the display, to obtain a fourth projection point;
determining a projection midpoint between the third projection point and the fourth projection point; and
using the projection midpoint as the ink dot generation central point.

15. The method according to claim 14, wherein determining the ink dot spreading distance in response to the shake operation comprises:
in response to the shake operation, calculating a spatial distance between the third tip spatial coordinates and the fourth tip spatial coordinates, and using the spatial distance as an actual shaking amplitude corresponding to the shake operation;
using a vertical component of the fourth tip spatial coordinates relative to the display as an actual dripping height at which the ink dot drips; and
determining, based on a correspondence among a dripping height, a shaking amplitude, and an ink dot spreading distance, the ink dot spreading distance corresponding to the actual dripping height and the actual shaking amplitude.

16. The method according to claim 1, wherein the stylus is performing an eyedropper function, the preset gesture operation is a squeeze operation, and generating and displaying the ink wash painting in response to the preset gesture operation comprises:
determining a closed area based on attribute information of a pre-collected pixel in response to the squeeze operation; and
performing color filling on the closed area, and generating and displaying the ink wash painting obtained through filling.

17. An interaction apparatus, wherein the interaction apparatus is disposed in an electronic device, the electronic device supports a stylus as a corresponding input device, and the interaction apparatus comprises:
a detection unit, configured to: detect that the stylus is in a hover state and detect a preset gesture operation on the stylus; and
a processing unit, configured to: generate and display an ink wash painting in response to the preset gesture operation.

18. An electronic device, wherein the electronic device comprises:
at least one processor; and
a memory coupled to the at least one processor, wherein
the at least one processor is configured to implement the steps in the method according to any one of claims 1 to 16 when executing a computer program stored in the memory.

19. A computer-readable storage medium, wherein the computer-readable storage medium stores a computer program, and when the computer program is executed by a processor, the steps in the method according to any one of claims 1 to 16 are implemented.
